(19) Europäisches Patentamt / European Patent Office / Office européen des brevets

(11) EP 4 389 459 B1

(12) **EUROPEAN PATENT SPECIFICATION**

(45) Date of publication and mention of the grant of the patent:
**18.03.2026 Bulletin 2026/12**

(21) Application number: **23216381.6**

(22) Date of filing: **13.12.2023**

(51) International Patent Classification (IPC):
***B60C 11/03*** (2006.01) ***B60C 3/04*** (2006.01)
***B60C 1/00*** (2006.01) ***B60C 11/00*** (2006.01)

(52) Cooperative Patent Classification (CPC):
**B60C 1/0016; B60C 3/04; B60C 11/0306; B60C 11/033;** B60C 2011/0025; Y02T 10/86

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2022 JP 2022204678**

(43) Date of publication of application:
**26.06.2024 Bulletin 2024/26**

(73) Proprietor: **Sumitomo Rubber Industries, Ltd.**
**Kobe-shi, Hyogo 651-0072 (JP)**

(72) Inventor: **SUGAHARA, Kazuchika**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 4 074 520**
**WO-A1-2021/215278**
**JP-A- 2022 021 503**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 389 459 B1

**Description**

TECHNICAL FIELD

The present invention relates to a tire.

BACKGROUND OF THE INVENTION

In recent years, a wide range of performances have been required for a vehicle. Examples of important performances among them include an improved comfortability (secured vehicle space) and fuel efficiency.
JP 2017-19494 A describes a tire that may improve in comfortability by a cross-sectional width of the tire being reduced. WO 2021/215278 A1 discloses a tire having a tread which includes a rubber composition comprising silica and carbon black, wherein the tan δ at 30°C of the rubber composition is 0.10 to 0.14, and the rubber composition contains natural rubber, styrene-butadiene rubber, oil, and a resin component. JP 2022-021503 A discloses a tire having a tread made of a rubber composition comprising silica, carbon black, an isoprene-based rubber, styrene-butadiene rubber, and oil. EP 4 074 520 A1 discloses a tire comprising a tread, wherein the rubber composition comprises rubber components including an isoprene-based rubber, a styrene-butadiene rubber, fillers including silica and carbon black, and a solid plasticizer, wherein the tan δ at 30°C of the rubber composition is 0.10 or less.

SUMMARY OF THE INVENTION

However, it is necessary to secure a wheelhouse corresponding to an outer diameter of a tire in a vehicle, and therefore there is a limit for improving comfortability only by reducing a tire cross-sectional width.
In addition, it is assumed that the vehicle runs with a high load because it becomes possible to load more bags and the like due to improvement of comfortability. There is still room for improvement of fuel efficiency of the tire when the vehicle runs under the high load.
It is an object of the present invention to provide a tire having improved fuel efficiency during high-load running.
The present invention relates to a tire below:

A tire comprising a tread part,
wherein a tire outer diameter Dt is 600 mm or less,
wherein the tread part is composed of a rubber composition comprising a rubber component and a filler,
wherein a tire cross-sectional width Wt, in mm, and a tan δ at 30°C (30°C tan δ) of the rubber composition satisfy the following inequality (1):

$$30°C\ \tan\delta \leqq -7.84\times10^{-5}\times(Wt-195)^2+0.175 \quad (1),$$

wherein a total styrene amount in the rubber component of the rubber composition is greater than 10% by mass,
wherein the rubber component comprises an isoprene-based rubber,
wherein a total content of plasticizing agents based on 100 parts by mass of the rubber component of the rubber composition is 12 parts by mass or less, and
wherein a content of the isoprene-based rubber in the rubber component is 25% by mass or less.

According to this invention, provided is a tire having improved fuel efficiency during high-load running.

BRIEF DESCRIPTION OF THE DRAWINGS

FIG. 1 is one example of a developed view of a tread part of a tire.
FIG. 2 shows a tire cross-sectional width Wt, a tire cross-sectional height Ht, and a tire outer diameter Dt in a sectional view of the tire.

DETAILED DESCRIPTION

The tire of the present invention is a tire comprising a tread part, wherein a tire outer diameter Dt is 600 mm or less, wherein the tread part is composed of a rubber composition comprising a rubber component and a filler, and wherein a tire

cross-sectional width Wt, in mm, and a tan δ at 30°C (30°C tan δ) of the rubber composition satisfy the following inequality (1):

$$30°C\ \tan\delta \leqq -7.84\times10^{-5}\times(Wt-195)^{2}+0.175\ (1),$$

wherein a total styrene amount in the rubber component of the rubber composition is greater than 10% by mass, the rubber component comprises an isoprene-based rubber, a total content of plasticizing agents based on 100 parts by mass of the rubber component of the rubber composition is 12 parts by mass or less, and a content of the isoprene-based rubber in the rubber component is 25% by mass or less.

Although it is not intended to be bound by any theory, in the present invention, as a mechanism by which fuel efficiency during high-load running may be improved, the following is considered.

As described above, there is a limit for improving comfortability only by reducing the tire cross-sectional width. However, comfortability can be further improved by setting the tire outer diameter Dt to 600 mm or less. However, on the other hand, when a vehicle equipped with a tire having a small outer diameter runs under a high load, deflection in a sidewall part of the tire reduces, and deformation (compression) of a tread part in a tire radial direction when the tread part contacts a road surface becomes larger. Therefore, when the tire cross-sectional width Wt, in mm, and the 30°C tan δ of the rubber composition of the tread part satisfy the above-described inequality (1), (I) in a region where the Wt is small and the tread part becomes more easily deformed, the 30°C tan δ becomes smaller as the Wt becomes smaller, so that heat generation due to deformation of the tread part is suppressed. Moreover, (II) in a region where the Wt is large, an area (volume) of the entire tread part becomes large, and heat generation of the entire tread part becomes large, the 30°C tan δ becomes smaller as the Wt becomes larger, so that heat generation of the entire tread part can be suppressed. As such, by satisfying the above-described inequality (1), in a tire having a tire outer diameter Dt of 600 mm or less, it is considered that a remarkable effect of improving fuel efficiency during high-load running is achieved.

The Wt, in mm, is preferably 180 or more and 225 or less.

When the Wt, in mm, is less than 180, an influence of heat generation in the tread part due to a decrease in deflection in the sidewall part becomes large, so that it is considered that low heat generation becomes less likely to be improved. Moreover, from the viewpoint of space saving, the Wt, in mm, is preferably 225 or less.

The 30°C tan δ of the rubber composition is preferably 0.10 or less.

When the 30°C tan δ is 0.10 or less, heat generation in the tread part is suppressed, so that it is considered that fuel efficiency is further improved.

It is preferable that the rubber composition further comprises a mercapto-based silane coupling agent.

When the rubber composition comprises a mercapto-based silane coupling agent, it is considered that dispersibility of silica can be improved and heat generation due to aggregation of fillers can be suppressed.

The filler preferably comprises silica having an average primary particle size of 16 nm or less. When the filler comprises silica having an average primary particle size of 16 nm or less, interaction with the rubber component increases, movement of a molecular chain of the rubber component is suppressed, and heat generation of the rubber composition can be suppressed, so that it is considered that fuel efficiency is further improved.

A total styrene amount in the rubber component in the rubber composition is preferably less than 20% by mass. The total styrene amount in the rubber component is at a certain level or below, heat generation by a styrene group in the rubber component is suppressed, so that it is considered that fuel efficiency is further improved.

The rubber component comprises an isoprene-based rubber. Since the isoprene-based rubber has a high strength, the rubber composition becomes less likely to be deformed, and heat generation of the rubber composition can be suppressed, so that it is considered that low heat generation is further improved.

A total content of plasticizing agents based on 100 parts by mass of the rubber component of the rubber composition is 12 parts by mass or less. By setting an upper limit value of the content of the plasticizing agents to the above-described value range, heat generation is suppressed, so that it is considered that fuel efficiency is further improved.

A total content of the filler based on 100 parts by mass of the rubber component of the rubber composition is preferably 60 parts by mass or less. By setting an upper limit value of the content of the fillers to the above-described value range, heat generation is suppressed, so that it is considered that fuel efficiency is further improved.

The rubber composition preferably comprises a vegetable oil as a plasticizing agent.

When the rubber composition comprises a vegetable oil, dispersibility of the filler is improved, so that it is considered that heat generation due to aggregation of the fillers can be suppressed.

It is preferable that a ratio ($G/W_L$) of a tire weight G, in kg, to a maximum load capacity $W_L$, in kg, of the tire is 0.0150 or less. By making the tire weight smaller with respect to the maximum load capacity of the tire, an energy during rolling can be reduced according to the weight of the tire, even if the same weight is applied, and an energy applied to the tire is reduced, so that it is considered that fuel efficiency is further improved.

A ratio (Wt/Dt) of the tire cross-sectional width Wt, in mm, to the tire outer diameter Dt, in mm, is preferably 0.30 or

more. By making the tire cross-sectional width smaller with respect to the tire outer diameter, deformation during rolling is easily received at the tread part. Moreover, the tread surface becomes large, so that a force applied to the tread part is easily dispersed. From these facts, heat generation during high-load running is reduced, so that it is considered that fuel efficiency is further improved.

A land ratio of the tread part on a grounding surface is 65% or more. When the land ratio is 65% or more, a grounding area (volume) of the tread part is increased, heat generation due to deformation of the entire tread part can be suppressed, so that it is considered that fuel efficiency is further improved.

<Definition>

A "standardized rim" is a rim in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire of a size that is not defined by the standard, the "standardized rim" shall refer to a rim that can be assembled and maintain an internal pressure, that is, one that has the smallest rim diameter and secondly has the narrowest rim width, among rims that do not cause air leakage between the rim and the tire.

A "standardized internal pressure" is an air pressure in a standard system including a standard on which the tire is based, defined for each tire by the standard, i.e., a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the rim conforms to its standard. In addition, in the case of the tire of the size that is not specified in the standard, the standardized internal pressure refers to a standardized internal pressure (250 KPa or more) of another tire size (provided that it is specified in the standard) for which the standardized rim is described as a standard rim. Besides, when a plurality of standardized internal pressures of 250 KPa or more are described, the minimum value among them shall be referred.

A "standardized state" is a state where the tire is rim-assembled on a standardized rim, a standardized internal pressure is filled, and no load is applied. Besides, in the present specification, a dimension of each part of the tire is measured in a standardized state, unless otherwise specified.

A "tire outer diameter Dt, in mm" is a tire outer diameter measured in a standardized state.

A "tire cross-sectional width Wt, in mm" refers to the maximum width between outer surfaces of sidewalls in the standardized state (however, excluding patterns or characters, if they are present on the side surface of the tire).

A "tire cross-sectional height Ht, in mm" is a length of half a difference between the tire outer diameter and the rim diameter, which is measured in a standardized state where the tire is rim-assembled on a standardized rim, filled with a standardized internal pressure, and applied with no load.

A "tire weight G, in kg" refers to a weight of a single tire excluding a weight of a rim. On the other hand, when a member consisting of a sponge or a sealant or a sensor member, etc. are provided on a tire lumen, G, in kg, shall be a weight including these weights.

A "tire volume V, in $mm^3$" is calculated from Wt, in mm, Ht, in mm, and Dt, in mm, by the following equation:

$$V=\{(Dt/2)^2-(Dt/2-Ht)^2\}\times\pi\times Wt.$$

A "maximum load capacity $W_L$, in kg, of the tire" is calculated from a tire volume V by the following equation. Besides, it is different from a "maximum load capacity" based on the load index defined by the JATMA standard.

$$W_L=0.000011\times V+100.$$

A "total styrene amount (S) in a rubber component" is a total content (% by mass) of styrene parts comprised in 100% by mass of the rubber component in the rubber composition and is calculated by Σ (styrene content of each styrene-containing rubber (% by mass)) × content in rubber component of each styrene-containing rubber (% by mass) / 100). For example, when the rubber component is composed of 30% by mass of a first SBR (25% by mass of styrene content), 60% by mass of a second SBR (27.5% by mass of styrene content), and 10% by mass of a BR, the total styrene amount (S) in 100% by mass of the rubber component is 24.0% by mass (=25×30/100+27.5×60/100). Besides, a styrene amount of a styrene-containing rubber is calculated by a method which will be described later.

A "land ratio (%)" refers to a ratio of an actual grounding area to a total grounding area on a grounding surface of a

tread part. A method of measuring the total grounding area and the actual grounding area will be described later.

A "plasticizing agent" is a material that gives plasticity to a rubber component and includes a liquid plasticizing agent (a plasticizing agent that is liquid (in a liquid state) at normal temperature (25°C)) and a solid plasticizing agent (a plasticizing agent that is solid at normal temperature (25°C)), which refers to a component extracted from the rubber composition by acetone extraction. Besides, a method of acetone extraction will be described later.

<Measuring method>

A "30°C tan δ" is a loss tangent measured under a condition of a temperature at 30°C, a frequency of 10 Hz, an initial strain of 5%, a dynamic strain of ±1%, and an extension mode, using EPLEXOR series manufactured by gabo Systemtechnik GmbH. A sample for loss tangent measurement is a vulcanized rubber composition of 20 mm in length × 4 mm in width × 1 mm in thickness. When it is produced by being cut out from a tire, it is cut out from a tread part so that a tire circumferential direction becomes a long side and a tire radial direction becomes a thickness direction.

A "grounding shape of a tread part" can be obtained by mounting a tire on a standardized rim, applying a standardized internal pressure, and leaving it to stand at 25°C for 24 hours, followed by painting the tire tread surface with ink, applying the maximum load capacity to press the tread part against a paper at a camber angle of 0°, and transferring it to the paper. The transfer is performed at five sites by rotating the tire in a circumferential direction by 72°. Therefore, the grounding shape is obtained five times.

A "total grounding area" shall be an average value of five sites of areas obtained by an outer contour in the grounding shape of the tread part. An "actual grounding area" shall be an average value of five sites of areas of ink portions in the grounding shape of the tread part. That is, a land ratio is obtained by the following equation:

Land ratio R = average value of five sites of areas of ink portions / average value of five sites of areas obtained by outer contour in grounding shape × 100.

An "average primary particle size of silica" is calculated by an arithmetic mean of particle sizes of 400 particles which are photographed with a transmission or scanning electron microscope when, in a case that the particle is in a substantially spherical shape, the diameter of sphere is defined as a particle size, in a case that it is in a needle or rod shape, the minor axis is defined as a particle size, and in a case that it is in an indefinite shape, an average size of the minor axis and the diameter is defined as a particle size. A "$N_2SA$ of silica" is measured by the BET method according to ASTM D3037-93.

An "average primary particle size of carbon black" is calculated by an arithmetic mean of particle sizes of 400 particles which are photographed with a transmission or scanning electron microscope when, in a case that the particle is in a substantially spherical shape, the diameter of sphere is defined as a particle size, in a case that it is in a needle or rod shape, the minor axis is defined as a particle size, and in a case that it is in an indefinite shape, an average size of the minor axis and the diameter is defined as a particle size. A "$N_2SA$ of carbon black" is measured according to JIS K 6217-2: 2017.

A "styrene content" is calculated by $^1$H-NMR measurement. For example, it is applied to a styrene-containing rubber such as a SBR and the like.

A "vinyl bond content (1,2-bond butadiene unit amount)" is measured by infrared absorption spectrometry. For example, it is applied to a SBR, a BR, and the like.

A "cis 1,4 bond content (cis content)" is a value calculated by infrared absorption spectrometry. For example, it is applied to a BR and the like.

A "glass transition temperature (Tg) of a rubber component" is a value measured by differential scanning calorimetry (DSC) under a condition of a temperature rising rate of 10°C/min according to JIS K 7121, which is applied to, for example, a SBR, a BR, and the like.

A "weight-average molecular weight" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation). For example, it is applied to a SBR, a BR, resin, a liquid polymer, and the like.

An "acetone extraction" is measured according to JIS K 6229:2015.

A "softening point" is a temperature at which a sphere drops when the softening point specified in JIS K 6220-1: 2001 is measured with a ring and ball softening point measuring device. For example, it is applied to a resin component and the like.

<Tire>

The tire of the present invention will be described with reference to the drawings as appropriate, but the drawings do not limit the present invention.

FIG. 1 is a developed view of a tread part 10 of a tire according to one embodiment of the present invention. In FIG. 1, the tread part has a plurality of circumferential grooves 11. Although the circumferential groove 11 extends linearly along the circumferential direction C, it is not limited to such an embodiment, and may extend in, for example, a wavy shape, a sinusoidal shape, or a zigzag shape along the circumferential direction. In FIG. 1, four circumferential grooves 11 are provided, though the number of circumferential grooves is not particularly limited and may be, for example, two to five. In the present specification, the term "circumferential groove" refers to a groove extending continuously in a tire circumferential direction C.

A shoulder land part 12 is a pair of land parts formed between the circumferential groove 11 and a tread end Te. A center land part 13 is a land part formed between a pair of shoulder land parts 12. In FIG. 1, three center land parts 13 are provided, though the number of center land parts is not particularly limited and may be, for example, one to five.

In FIG. 1, the shoulder land part 12 is provided with a width direction groove 14, one end of which communicates with the circumferential groove 11. Moreover, the center land part 13 is provided with a width direction groove 15 crossing the center land part 13, both ends of which communicate with the circumferential grooves, and a width direction groove 16, one end of which communicates with the circumferential groove 11, though it is not limited to such aspects.

In the present invention, the land ratio of the grounding surface of the tread part is preferably 60% or more, more preferably 65% or more, further preferably 70% or more, particularly preferably 75% or more, from the viewpoint that the grounding area (volume) of the tread part is increased, so that heat generation due to deformation of the entire tread part can be suppressed, further improving fuel efficiency. Moreover, the land ratio is preferably 90% or less, more preferably 85% or less, further preferably 80% or less, from the viewpoint of wet grip performance. Besides, the land ratio is calculated by the above-described measuring method.

In the present invention, the tread part is composed of a rubber composition. The tread part may be a single rubber layer or may comprise two or more rubber layers. When the tread part comprises two or more layers, it preferably comprises a cap rubber layer constituting a tread surface and a base rubber layer adjacent to an outer side of a belt layer in a tire radial direction. One or more intermediate rubber layers may be further present between the cap rubber layer and the base rubber layer. In the present invention, each physical property value such as a tan $\delta$ at 30°C and the like of the rubber composition of the tread part may satisfy, in a case where the tread part comprises two or more rubber layers, a physical property value in any of the rubber layers, preferably in the cap rubber layer.

The tire outer diameter Dt is preferably 500 mm or more, more preferably 520 mm or more, further preferably 540 mm or more. When the Dt is 500 mm or more, a unit time of contact between a road surface and a tread part can be shortened, so that a shear deformation occurring in the tread part can be reduced, and it is considered that heat generation in the tread part can be suppressed. Moreover, the tire outer diameter Dt of the tire according to the present invention is 600 mm or less, preferably 595 mm or less, more preferably 590 mm or less, further preferably 550 mm or less.

The tire cross-sectional width Wt is preferably 160 mm or more, more preferably 170 mm or more, further preferably 180 mm or more, from the viewpoint of making it easier for the tread part to receive deformation, reducing a force per unit area applied to the tread part. Moreover, an upper limit value of the tire cross-sectional width Wt is, but not particularly limited to, preferably less than 300 mm, more preferably less than 250 mm, further preferably less than 240 mm, further preferably 230 mm or less.

The tire cross-sectional height Ht is preferably less than 130 mm, more preferably less than 120 mm, further preferably less than 100 mm, from the viewpoint of reducing an amount of deformation applied to a sidewall part. Moreover, a lower limit of the Ht is, but not particularly limited to, preferably 60 mm or more, more preferably 70 mm or more, further preferably 80 mm or more.

The tire volume V ($mm^3$) is preferably $2.00\times10^7$ $mm^3$ or more, more preferably $2.10\times10^7$ $mm^3$ or more, further preferably $2.20\times10^7$ $mm^3$ or more. On the other hand, the volume V is preferably less than $3.80\times10^7$ $mm^3$, more preferably less than $3.75\times10^7$ $mm^3$, further preferably less than $3.30\times10^7$ $mm^3$.

The tire weight G, in kg, of the tire according to the present invention is preferably 8.5 kg or less, more preferably 8.0 kg or less, further preferably 7.5 kg or less, from the viewpoint of reducing an energy applied to the tire during rolling. Moreover, a lower limit value of the tire weight G, in kg, is, but not particularly limited to, usually 3.0 kg or more.

Besides, the tire weight G, in kg, can be appropriately adjusted by a known method, for example, it can be decreased by reducing a thickness of each rubber layer forming the tire, by reducing a specific gravity of a material constituting the tire, or the like.

The ratio ($G/W_L$) of the tire weight, in kg, to the maximum load capacity $W_L$, in kg, of the tire is preferably 0.0150 or less, more preferably 0.0145 or less, further preferably 0.0135 or less, from the viewpoint of reducing an energy applied to the tire during rolling. Moreover, a lower limit value of the $G/W_L$ is, but not particularly limited to, preferably 0.0100 or more, more preferably 0.0110 or more, further preferably 0.0115 or more.

Besides, the maximum load capacity $W_L$ can be appropriately adjusted by a known method, for example, it can be increased by increasing the outer diameter Dt or the cross-sectional width Wt.

The ratio (Wt/Dt) of the tire cross-sectional width Wt, in mm, to the tire outer diameter Dt, in mm, is preferably 0.30 or more, more preferably 0.32 or more, further preferably 0.33 or more, from the viewpoint of making it easier for the tread

part to receive deformation during rolling, dispersing the force applied to the tread part. Moreover, an upper limit is, but not particularly limited to, preferably 0.50 or less, more preferably 0.48 or less, further preferably 0.45 or less.

The tire according to one embodiment of the present invention is mounted on a vehicle. Examples of the vehicle include, for example, a four-wheeled vehicle, but the vehicle is not limited to the four-wheeled vehicle, and may be of a three-wheeled, a six-wheeled, or an eight-wheeled configuration, or the like. Moreover, the vehicle can be, for example, an electric vehicle that operates autonomously (level 4 or higher), but it is not limited to this, and may not be operated autonomously, and an operating subject may be a human. Furthermore, the vehicle may not be an electric vehicle, and may be a gasoline-powered vehicle or a hybrid electric vehicle.

[Rubber composition]

The rubber composition of the tread part of the present invention (hereinafter referred to as the rubber composition according to the present invention, unless otherwise specified) will be described in detail below.

In the tire according to the present invention, the tire cross-sectional width Wt, in mm, and the tan δ at 30°C (30°C tan δ) of the rubber composition according to the present invention satisfy the following inequality (1):

$$30°C \tan \delta \leqq -7.84\times10^{-5}\times(Wt-195)^2+0.175 \quad (1).$$

The tan δ at 30°C (30°C tan δ) of the rubber composition according to the present invention is preferably 0.20 or less, more preferably 0.19 or less, further preferably 0.18 or less, further preferably 0.16 or less, further preferably 0.15 or less, particularly preferably 0.14 or less, most preferably 0.10 or less, from the viewpoint of suppressing heat generation. Moreover, a lower limit of the tan δ at 30°C is, but not particularly limited to, preferably 0.06 or more, more preferably 0.08 or more, further preferably 0.09 or more, particularly preferably 0.10 or more.

The tan δ of the rubber composition can be adjusted by a conventional method in the tire industry. For example, the tan δ can be increased by using a rubber component having a high glass transition temperature, increasing an amount of a filler, decreasing a particle size, increasing a resin component as a plasticizing agent component, reducing amounts of sulfur and an accelerator, or the like.

The total styrene amount in the rubber component of the rubber composition according to the present invention is preferably less than 25% by mass, more preferably less than 22% by mass, further preferably less than 20% by mass, from the viewpoint of suppressing heat generation by a styrene group to further improve fuel efficiency. Moreover, a lower limit of the total styrene amount is greater than 10% by mass, more preferably greater than 15% by mass, further preferably greater than 18% by mass.

<Rubber component>

The rubber composition according to the present invention comprises a rubber component. The rubber component comprises an isoprene-based rubber, more preferably comprises an isoprene-based rubber and a SBR, further preferably comprises an isoprene-based rubber, a SBR, and a BR. Moreover, an extended rubber may be used as any of these components, which was extended in advance with a plasticizing agent component such as oil, a resin component, and the like which will be described later. When an extended rubber is used as the rubber component, a content of the plasticizing agent component based on 100 parts by mass of a rubber solid content is preferably 10 parts by mass or more and 50 parts by mass or less.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

In the present invention, a content of the isoprene-based rubber in the rubber component is preferably 1% by mass or more, more preferably 3% by mass or more, further preferably 4% by mass or more, particularly preferably 5% by mass or more. On the other hand, the content of the isoprene-based rubber in the rubber component is 25% by mass or less.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated additives of these SBRs (hydrogenated SBRs) and the like can also be used. Among them, a S-SBR is preferable, and a modified S-SBR is more preferable.

Examples of the modified SBR include a modified SBR into which a functional group usually used in this field is introduced. Examples of the above-described functional group include, for example, an amino group (preferably an amino group in which a hydrogen atom of the amino group is substituted with an alkyl group having 1 to 6 carbon atoms), an amide group, a silyl group, an alkoxysilyl group (preferably an alkoxysilyl group having 1 to 6 carbon atoms), an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Besides, these functional groups may have a substituent. Examples of the substituent include, for example, functional groups such as an amino group, an amide group, an alkoxysilyl group, a carboxyl group, a hydroxyl group, and the like. Moreover, examples of the modified SBR include hydrogenated ones, epoxidized ones, tin-modified ones, and the like.

The SBRs listed above may be used alone, or two or more thereof may be used in combination. As the SBRs listed above, for example, SBRs manufactured and sold by Sumitomo Chemical Co., Ltd., JSR Corporation, Asahi Kasei Corporation, Zeon Corporation, ZS Elastomer Co., Ltd., etc. can be used.

A styrene content of the SBR is preferably 5% by mass or more, more preferably 10% by mass or more, further preferably 20% by mass or more, particularly preferably 25% by mass or more, from the viewpoint of securing damping property in the tread part. On the other hand, an upper limit value of the styrene content of the SBR is preferably 45% by mass or less, more preferably 40% by mass or less, further preferably 35% by mass or less. Besides, the styrene content of the SBR is calculated by the above-described measuring method.

A vinyl bond amount of the SBR is preferably 10 mol% or more, more preferably 20 mol% or more, further preferably 30 mol% or more, from the viewpoints of ensuring reactivity with silica, rubber strength, and abrasion resistance. Moreover, the vinyl bond amount of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, the vinyl bond amount (1,2-bonded butadiene unit amount) of the SBR is calculated by the above-described measuring method.

A glass transition temperature (Tg) of the SBR is preferably -20°C or lower, more preferably -25°C or lower, further preferably -30°C or lower, from the viewpoint of preventing low temperature brittleness. On the other hand, a lower limit value of the Tg is, but not particularly limited to, preferably -70°C or higher, more preferably -60°C or higher, further preferably -50°C or higher, from the viewpoint of abrasion resistance. The glass transition temperature (Tg) of the SBR is measured by the above-described measuring method.

A weight-average molecular weight (Mw) of the SBR is preferably 150,000 or more, more preferably 200,000 or more, further preferably 250,000 or more, from the viewpoint of abrasion resistance. Moreover, the Mw is preferably 2,500,000 or less, more preferably 2,000,000 or less, from the viewpoints of cross-linking uniformity, etc. Besides, the Mw is measured by the above-described measuring method.

A content of the SBR in 100% by mass of the rubber component is preferably 30% by mass or more, more preferably 50% by mass or more, further preferably 70% by mass or more, from the viewpoint of effects of the present invention. Moreover, the content is preferably 95% by mass or less, more preferably 90% by mass or less, further preferably 85% by mass or less, from the viewpoint of suppressing heat generation in the tread part.

(BR)

A BR is not particularly limited, and those common in the tire industry can be used such as, for example, a BR having a cis-1,4 bond content (cis content) of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR), and the like. Examples of the modified BR include BRs modified with similar functional groups and the like as explained in the above-described SBR.

Examples of the high cis BR include, for example, those manufactured by Zeon Corporation, those manufactured by Ube Industries, Ltd., those manufactured by JSR Corporation, and the like. When the high cis BR is compounded, low temperature characteristics and abrasion resistance can be improved. The cis content is preferably 95 mol% or more,

more preferably 96 mol% or more, further preferably 97 mol% or more. The cis content is also preferably 98 mol% or more. Besides, in the present specification, the cis content is a value calculated by infrared absorption spectrometry.

As a rare-earth-based BR, those which are synthesized using a rare-earth element-based catalyst, have a vinyl bond amount (1,2-bond butadiene unit amount) of preferably 1.8 mol% or less, more preferably 1.0 mol% or less, further preferably 0.8% mol or less, and a cis content (cis-1,4 bond content) of preferably 95 mol% or more, more preferably 96 mol% or more, further preferably 97 mol% or more, can be used. As the rare-earth-based BR, for example, those manufactured by LANXESS and the like can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those manufactured by Ube Industries, Ltd. and the like can be used.

As a modified BR, a modified butadiene rubber (a modified BR) modified at its terminal and/or main chain with a functional group comprising at least one element selected from a group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone, or two or more thereof may be used in combination.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw is measured by the above-described method.

A content of the BR when compounded in 100% by mass of the rubber component is preferably 3% by mass or more, more preferably 5% by mass or more, further preferably 9% by mass or more, from the viewpoint of the effects of the present invention. Moreover, the content is preferably 50% by mass or less, more preferably 30% by mass or less, further preferably 25% by mass or less, particularly preferably 15% by mass or less.

(Other rubber components)

As the rubber components according to the present invention, rubber components other than the above-described isoprene-based rubbers, SBRs, and BRs may be compounded. As other rubber components, crosslinkable rubber components commonly used in the rubber industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

<Filler>

The rubber composition according to the present invention preferably comprises a filler. The rubber composition preferably comprises, as the filler, at least one selected from the group consisting of carbon black and silica, more preferably silica, further preferably carbon black and silica. Moreover, the filler may be a filler consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. These silica may be used alone, or two or more thereof may be used in combination. Moreover, besides the above-described silica, a biomass silica made from a biomass material such as rice husks and the like may be used appropriately by replacing the above-described silica in an equivalent amount, from the viewpoint of life cycle assessment.

A nitrogen adsorption specific surface area ($N_2SA$) of silica is preferably 140 $m^2/g$ or more, more preferably 150 $m^2/g$ or more, further preferably 160 $m^2/g$ or more, particularly preferably 170 $m^2/g$ or more, from the viewpoint of securing reinforcing property and damping property at the tread part. Moreover, it is preferably 350 $m^2/g$ or less, more preferably 300 $m^2/g$ or less, further preferably 250 $m^2/g$ or less, from the viewpoints of heat generation and processability. The $N_2SA$ of silica is measured by the above-described measuring method.

An average primary particle size of silica is preferably 18 nm or less, more preferably 17 nm or less, further

preferably 16 nm or less, from the viewpoint of increasing a specific surface area of silica to increase an interaction with the rubber component, suppress movement of a molecular chain, and suppress heat generation. A lower limit of the average primary particle size is, but not particularly limited to, preferably 1 nm or more, more preferably 3 nm or more, further preferably 5 nm or more. The average primary particle size of silica can be calculated by the above-described measuring method.

A content of silica when compounded based on 100 parts by mass of the rubber component is preferably greater than 20 parts by mass, more preferably greater than 30 parts by mass, further preferably greater than 50 parts by mass, particularly preferably greater than 55 parts by mass, from the viewpoint of improving flexibility of the rubber composition. Moreover, it is preferably less than 100 parts by mass, more preferably less than 95 parts by mass, further preferably less than 90 parts by mass, further preferably less than 85 parts by mass, from the viewpoint of reducing the specific gravity of the rubber to reduce the weight.

(Carbon black)

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon black may be used alone, or two or more thereof may be used in combination. Moreover, besides the above-described carbon black made from a mineral oil, etc. as a raw material, a biomass-derived carbon black obtained by burning lignin, etc. and a recovered carbon black obtained by pyrolyzing and purifying a rubber product comprising carbon black such as a tire and the like may be used appropriately by replacing the above-described carbon black in equivalent amounts.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and durability. Besides, the nitrogen adsorption specific surface area ($N_2SA$) of carbon black is calculated by the above-described measuring method.

An average primary particle size of carbon black is preferably 80 nm or less, more preferably 40 nm or less, further preferably 30 nm or less. Moreover, the average primary particle size is preferably 10 nm or more, more preferably 15 nm or more, further preferably 20 nm or more. When the average primary particle size of carbon black is within the above-described ranges, dispersibility of carbon black is improved, and heat generation of the rubber composition is suppressed, so that it is considered that fuel efficiency is further improved. The average primary particle size of carbon black can be calculated by the above-described measuring method.

A content of carbon black when compounded based on 100 parts by mass of the rubber component is preferably greater than 1 parts by mass, more preferably greater than 3 parts by mass, further preferably 5 parts by mass or more, from the viewpoint of reinforcing property. Moreover, the content is preferably less than 30 parts by mass, more preferably less than 20 parts by mass, further preferably less than 10 parts by mass, from the viewpoint of improving fuel efficiency by suppressing heat generation.

(Other fillers)

As fillers other than silica and carbon black, those conventionally and commonly used in the tire industry can be compounded, such as short fiber materials such as aluminum hydroxide, calcium carbonate, alumina, clay, talc, biochar (BIO CHAR), cellulose nanofiber, and the like.

A total content of fillers based on 100 parts by mass of the rubber component is preferably less than 150 parts by mass, more preferably less than 120 parts by mass, further preferably less than 100 parts by mass, further preferably less than 90 parts by mass, particularly preferably 60 parts by mass or less, from the viewpoint of improving fuel efficiency by suppressing heat generation. Moreover, it is preferably greater than 40 parts by mass, more preferably greater than 45 parts by mass, further preferably greater than 50 parts by mass, further preferably greater than 55 parts by mass, from the viewpoint of facilitating friction with the rubber component to secure damping property.

A content of silica based on the total content of fillers is preferably 80% by mass or more, more preferably 85% by mass or more, further preferably 90% by mass or more, particularly preferably 92% by mass or more. Moreover, the content of the silica is preferably 98% by mass or less, more preferably 90% by mass or less, further preferably 85% by mass or less.

(Silane coupling agent)

Silica is preferably used in combination with a silane coupling agent. The silane coupling agent is not particularly limited, and any silane coupling agent conventionally used in combination with silica in the tire industry can be used, but it is preferable to comprise a mercapto-based silane coupling agent.

In the present specification, the mercapto-based silane coupling agent refers to a silane coupling agent having a mercapto group and a silane coupling agent having a structure in which the mercapto group is protected with a protecting group. Examples of the mercapto-based silane coupling agent include, but not particularly limited to, for example, a compound having a mercapto group, represented by the following formula (2), a compound in which a mercapto group is protected with ester, represented by the following formula (3), a compound comprising a bond unit A represented by the following formula (4) and/or a bond unit B represented by the following formula (5), and the like. Among them, the compound represented by the following formula (3), or the compound comprising a bond unit A represented by the following formula (4) and/or a bond unit B represented by the following formula (5) is preferable, and the compound represented by the following formula (3) is more preferable, from the reason that the effects of the present invention can be better exhibited. These mercapto-based silane coupling agents may be used alone, or two or more thereof may be used in combination.

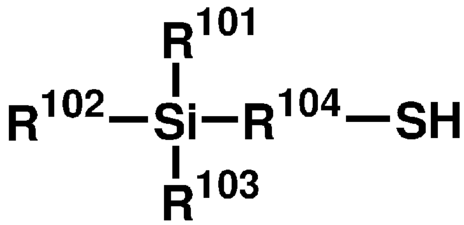 (2)

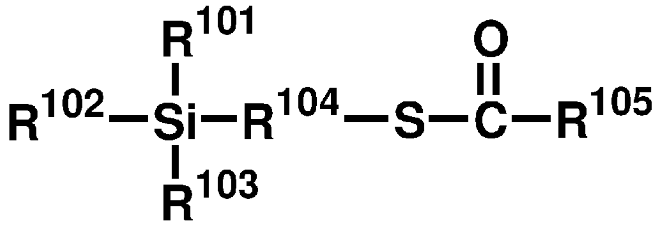 (3)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms, and $R^{105}$ represents an alkyl having 1 to 12 carbon atoms.)

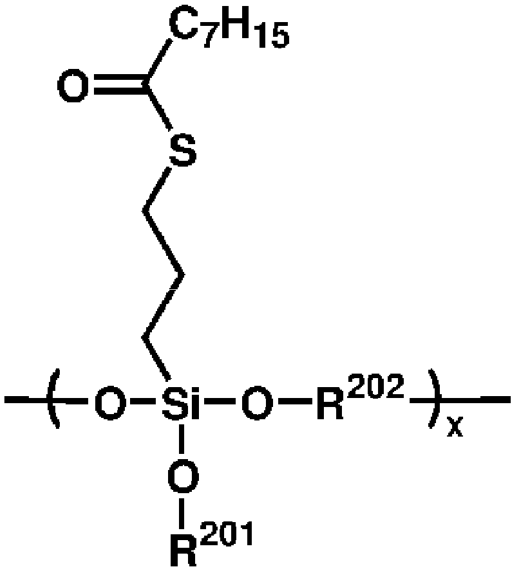

(4)

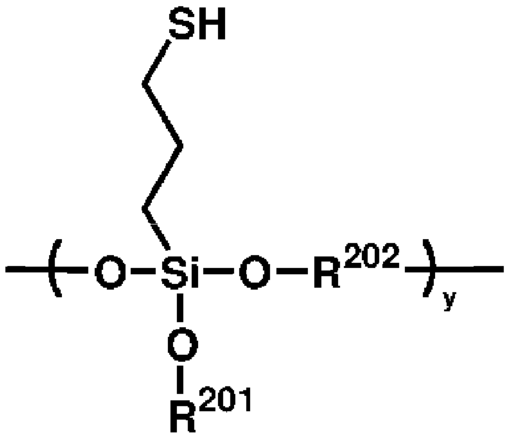

(5)

(wherein, x represents an integer of 0 or more; y represents an integer of 1 or more; $R^{201}$ represents hydrogen atom, an alkyl having 1 to 30 carbon atoms, an alkenyl having 2 to 30 carbon atoms, or an alkynyl having 2 to 30 carbon atoms (the alkyl, the alkenyl, and the alkynyl may be optionally substituted with a halogen atom, hydroxyl or carboxyl); and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (2) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (6) (Si363 manufactured by Evonik Degussa GmbH), and the like, and the compound represented by the following formula (6) can be appropriately used. They may be used alone, or two or more thereof may be used in combination.

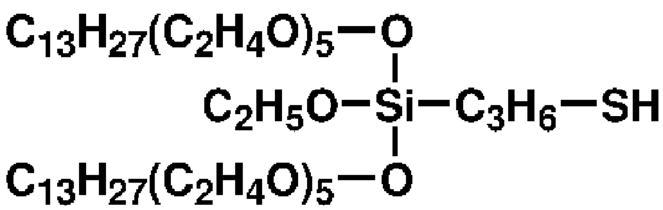

(6)

Examples of the compound represented by the formula (3) include, for example, 3-octanoylthio-1-propyltriethoxysilane, 3-hexanoylthio-1-propyltriethoxysilane, 3-octanoylthio-1-propyltrimethoxysilane, and the like.

In the compound comprising the bond unit A represented by the formula (4) and/or the bond unit B represented by the above-described formula (5), an increase of viscosity during processing is suppressed as compared with a sulfide-based silane coupling agent such as bis-(3-triethoxysilylpropyl)tetrasulfide, and the like. Therefore, silica dispersibility

becomes better, so that it is considered that fuel efficiency, wet grip performance, and elongation at break are further improved. It is considered that this is because a sulfide part of the bond unit A is a C-S-C bond and thus is thermally stable as compared with tetrasulfide or disulfide, thereby resulting in a small increase of Mooney viscosity.

A content of the bond unit A is preferably 30 to 99 mol%, more preferably 50 to 90 mol%, from the viewpoint of suppressing an increase of viscosity during processing. Moreover, a content of the bond unit B is preferably 1 to 70 mol%, more preferably 5 to 65 mol%, further preferably 10 to 55 mol%. Furthermore, a total content of the bond units A and B is preferably 95 mol% or more, more preferably 98 mol% or more, particularly preferably 100 mol%. Besides, the content of the bond units A and B is an amount including a case where the bond units A and B are located at the terminal of the silane coupling agent. A form where the bond units A and B are located at the terminal of the silane coupling agent is not particularly limited, as long as it forms units corresponding to the formula (4) representing the bond unit A and the formula (5) representing the bond unit B.

In the compound comprising the bond unit A represented by the formula (4) and the bond unit B represented by the formula (5), a total number of repetitions (x+y) of the number of repetitions of the bond unit A (x) and the number of repetitions of the bond unit B (y) is preferably in a range of 3 to 300. Within this range, mercaptosilane of the bond unit B is covered with -C7H15 of the bond unit A, so that shortening of scorch time can be suppressed, and a good reactivity with silica and rubber components can be secured.

Examples of the compound comprising the bond unit A represented by the formula (4) and/or the bond unit B represented by the formula (5) include, for example, NXT-Z30, NXT-Z45, NXT-Z60, and NXT-Z100 manufactured by Momentive Performance Materials, and the like. They may be used alone, or two or more thereof may be used in combination.

The rubber composition according to the present invention may further comprise other silane coupling agents in addition to the mercapto-based silane coupling agent. Examples of other silane coupling agents include, for example, silane coupling agents having a sulfide group such as bis(3-triethoxysilylpropyl)disulfide, bis(3-triethoxysilylpropyl) tetrasulfide, and the like; silane coupling agents having a vinyl group such as vinyltriethoxysilane, vinyltrimethoxysilane, and the like; silane coupling agents having an amino group such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxy, and the like; and the like. These other silane coupling agents may be used alone, or two or more thereof may be used in combination. As the silane coupling agents listed above, for example, silane coupling agents manufactured and sold by Momentive Performance Materials, Evonik Degussa GmbH, etc. can be used.

A content of the silane coupling agent when compounded based on 100 parts by mass of silica (a total content when two or more thereof are used in combination) is preferably greater than 1.0 parts by mass, more preferably greater than 3.0 parts by mass, further preferably greater than 5.0 parts by mass, from the viewpoint of enhancing dispersibility of silica. Moreover, it is preferably less than 30 parts by mass, more preferably less than 20 parts by mass, further preferably less than 15 parts by mass, from the viewpoint of preventing deterioration of abrasion resistance.

<Plasticizing agent>

The rubber composition according to the present invention preferably comprises a plasticizing agent. In the present specification, the plasticizing agent is a material that imparts plasticity to the rubber component, and includes both a liquid plasticizing agent (in a liquid state) at normal temperature (25°C) and a solid plasticizing agent at normal temperature (25°C). Examples of the plasticizing agent include, for example, oil, a resin component, a liquid polymer, an ester-based plasticizing agent, and the like. The plasticizing agent may be used alone, or two or more thereof may be used in combination. Besides, in the present specification, the plasticizing agent also includes a plasticizing agent contained in an extended rubber.

(Oil)

Examples of oil include, for example, a process oil, a vegetable oil, an animal oil, and the like. Examples of the process oil include a paraffin-based process oil, a naphthene-based process oil, an aroma-based process oil, and the like. In addition, as an environmental measure, examples of the process oil include a process oil having a low content of a polycyclic aromatic (PCA) compound. Examples of the process oil having a low content of a PCA include Treated Distillate Aromatic Extract (TDAE) in which an oil aromatic process oil is re-extracted, an aroma substitute oil which is a mixture of asphalt and a naphthenic oil, mild extraction solvates (MES), a heavy naphthenic oil, and the like. Moreover, from the viewpoint of life cycle assessment, those obtained by purifying a lubricating oil after being used in a rubber mixer, an engines, or the like, or a waste cooking oil after being used in a restaurant may be used appropriately by being replaced in

an equivalent amount. The rubber composition according to the present invention preferably comprises a vegetable oil.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at normal temperature (25°C). They may be used alone, or two or more thereof may be used in combination.

The vegetable oil according to the present embodiment preferably comprises acylglycerol, more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at normal temperature (25°C).

As a method of confirming whether the rubber composition comprises acylglycerol, the confirmation can be performed by, but not particularly limited to, $^1$H-NMR measurement. For example, a rubber composition comprising triacylglycerol is immersed in a heavy chloroform at normal temperature (25°C) for 24 hours and removed to measure $^1$H-NMR at room temperature, and when a signal of tetramethylsilane (TMS) is defined as 0.00 ppm, signals near 5.26 ppm, near 4.28 ppm, and near 4.15 ppm are observed, the signals being presumed to be derived from hydrogen atoms bonded to carbon atoms adjacent to oxygen atoms of an ester group. Besides, "near" in this paragraph refers to a range of $\pm$0.10 ppm.

The above-described fatty acid is not particularly limited, and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

A content of the unsaturated fatty acid contained in the constituent fatty acid of the vegetable oil is preferably 50% by mass or more, more preferably 60% by mass or more, further preferably 70% by mass or more, further preferably 75% by mass or more, further preferably 80% by mass or more, particularly preferably 85% by mass or more.

A content of oil when compounded as a plasticizing agent based on 100 parts by mass of the rubber component is preferably greater than 1 parts by mass, more preferably greater than 2 parts by mass, further preferably greater than 5 parts by mass, from the viewpoint of processability. Moreover, the content is preferably less than 80 parts by mass, more preferably less than 60 parts by mass, further preferably less than 40 parts by mass, from the viewpoint of the effects of the present invention. Besides, in the present specification, the content of oil also includes an amount of oil contained in an extended rubber.

(Resin component)

The resin component is not particularly limited, and may be solid or liquid at normal temperature (25°C), examples of which include a petroleum resin, a terpene-based resin, a rosin-based resin, a phenol-based resin, and the like, which are commonly used in the tire industry. These resin components may be used alone, or two or more thereof may be used in combination. The resin component preferably comprises at least one or more selected from the group consisting of a terpene resin and a petroleum resin from the viewpoint of improving durability during high-speed running.

Examples of the terpene-based resin include a polyterpene resin consisting of at least one selected from terpene compounds such as $\alpha$-pinene, $\beta$-pinene, limonene, a dipentene, and the like; an aromatic-modified terpene resin comprising a terpene compound and an aromatic compound as monomer components; a terpene phenol resin comprising a terpene compound and a phenol-based compound as monomer components; and those in which these terpene-based resins are hydrogenated (hydrogenated terpene-based resins). Examples of the aromatic compound used as a monomer component for the aromatic-modified terpene resin include, for example, styrene, $\alpha$-methylstyrene, vinyltoluene, a divinyltoluene, and the like. Examples of the phenol-based compound used as a monomer component for the terpene phenol resin include, for example, phenol, bisphenol A, cresol, xylenol, and the like.

Examples of the petroleum resin include, for example, a C5-based petroleum resin, an aromatic-based petroleum resin, and a C5-C9-based petroleum resin. These petroleum resins may be used alone, or two or more

thereof may be used in combination.

The C5-based petroleum resin refers to a resin obtained by polymerizing a C5 fraction. Examples of the C5 fraction include, for example, a petroleum fraction having 4 to 5 carbon atoms such as cyclopentadiene, a pentene, a pentadiene, isoprene, and the like. As the C5-based petroleum resin, a dicyclopentadiene resin (DCPD resin) is appropriately used.

The aromatic-based petroleum resin refers to a resin obtained by polymerizing a C9 fraction, and may be hydrogenated or modified. Examples of the C9 fraction include, for example, a petroleum fraction having 8 to 10 carbon atoms such as vinyltoluene, an alkylstyrene, indene, a methyl indene, and the like. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

The C5-C9-based petroleum resin refers to a resin obtained by copolymerizing a C5 fraction and a C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Group Co., Ltd, etc. can be appropriately used.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component with a filler. Besides, in the present specification, the softening point of the resin component is a value measured by the above-described method.

A content of the resin component when compounded based on 100 parts by mass of the rubber component is preferably greater than 1 parts by mass, more preferably greater than 2 parts by mass, further preferably greater than 3 parts by mass, from the viewpoint of the effects of the present invention. Moreover, it is preferably less than 30 parts by mass, more preferably less than 20 parts by mass, further preferably less than 15 parts by mass, particularly preferably less than 10 parts by mass, from the viewpoint of reducing heat generation.

(Liquid polymer)

The liquid polymer is not particularly limited as long as it is a polymer in a liquid state at normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like, and it may be one obtained by hydrogenating them, and may be a modified liquid polymer in which a main chain and/or a terminal thereof is modified with a modifying group (preferably a terminal-modified liquid polymer). These liquid polymers may be used alone, or two or more thereof may be used in combination.

Examples of the modified liquid polymer include, but not particularly limited to, for example, a liquid butadiene polymer modified at one or both ends thereof (terminal-modified liquid BR), a liquid styrene-butadiene polymer modified at one or both ends thereof (terminal-modified liquid SBR), and the like, and it may be one obtained by hydrogenating them.

The modifying group is not particularly limited, examples of which include, for example, a silyl group, a trialkoxysilyl group, an amino group, an amide group, an isocyanate group, an imino group, an imidazole group, an urea group, an ether group, a carbonyl group, an oxycarbonyl group, a sulfonyl group, a sulfinyl group, a thiocarbonyl group, an ammonium group, an imide group, a hydrazo group, an azo group, a diazo group, a nitrile group, a pyridyl group, an alkoxy group, a hydroxyl group, an oxy group, a carboxyl group, an epoxy group, an acrylic group, a methacrylic group, an acryloyl group, a methacryloyl group, and the like. Among them, one or more groups selected from a group consisting of a hydroxyl group, a carboxyl group, an acryloyl group, and a methacryloyl group are preferable.

A weight-average molecular weight (Mw) of the liquid polymer is preferably less than 50,000, more preferably 25,000 or less, more preferably 10,000 or less, further preferably 7,000 or less. Moreover, a lower limit of the Mw is, but not particularly limited to, preferably 1000 or more, more preferably 2500 or more, further preferably 3500 or more. Besides, the weight-average molecular weight (Mw) is measured by the above-described measuring method.

A content of the liquid polymer when compounded based on 100 parts by mass of the rubber component is preferably 0.5 parts by mass or more, more preferably 1 parts by mass or more, further preferably 3 parts by mass or more. Moreover, the content of the liquid rubber is preferably 25 parts by mass or less, more preferably 10 parts by mass or less, further preferably 7 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component is preferably 0.5 parts by mass or more, more preferably 1 parts by mass or more, further preferably 3 parts by mass or more. Moreover, the content of the ester-based plasticizing agent is preferably 30 parts by mass or less, more preferably 20 parts by mass or less, further preferably 15 parts by mass or less.

A total content of plasticizing agents based on 100 parts by mass of the rubber component is preferably greater than 3 parts by mass, more preferably greater than 5 parts by mass, further preferably greater than 10 parts by mass, from the viewpoint of processability. Moreover, it is 12 parts by mass or less, from the viewpoint of suppressing heat generation to improve fuel efficiency.

(Other compounding agents)

The rubber composition according to the present invention can appropriately comprise compounding agents conventionally and generally used in the tire industry, for example, wax, processing aid, an antioxidant, stearic acid, zinc oxide, a vulcanizing agent such as sulfur, a vulcanization accelerator, and the like, in addition to the above-described components.

The wax is not particularly limited, and any of those commonly used in the tire industry can be appropriately used, examples of which include, for example, a petroleum-based wax, a mineral-based wax, a synthetic wax, and the like. Among them, a petroleum-based wax is preferable. Examples of the petroleum-based wax include, for example, a paraffin wax, a microcrystalline wax, specially selected waxes thereof, and the like. Among them, a paraffin wax is preferable. Besides, the wax according to the present embodiment shall not comprise stearic acid. As the wax, for example, those commercially available from Ouchi Shinko Chemical Industry Co., Ltd., Nippon Seiro Co., Ltd., Paramelt B.V., etc. can be used. These waxes may be used alone, or two or more thereof may be used in combination.

A content of wax when compounded based on 100 parts by mass of the rubber component is preferably greater than 0.5 parts by mass, more preferably greater than 1 parts by mass, from the viewpoint of weather resistance of a rubber. Moreover, it is preferably less than 20 parts by mass, more preferably less than 15 parts by mass, from the viewpoint of preventing whitening of a tire due to bloom.

As processing aid, a fatty acid metal salt for the purpose of reducing viscosity of a rubber and securing releasability in an unvulcanized state, those widely and commercially available as a compatibilizer from the viewpoint of suppressing micro-layer separation of a rubber component, and the like can be used.

A content of processing aid when compounded based on 100 parts by mass of the rubber component is preferably greater than 0.5 parts by mass, more preferably greater than 1 parts by mass, from the viewpoint of exhibiting an effect of improving processability. Moreover, it is preferably less than 10 parts by mass, more preferably less than 8 parts by mass, from the viewpoints of abrasion resistance and breaking strength.

Examples of the antioxidant include, but not particularly limited to, for example, amine-based, quinoline-based, quinone-based, phenol-based, and imidazole-based compounds, a carbamic acid metal salt, and the like. These antioxidants may be used alone, or two or more thereof may be used in combination.

A total content of antioxidants when compounded based on 100 parts by mass of the rubber component is preferably greater than 0.5 parts by mass, more preferably greater than 1 parts by mass, further preferably greater than 1.5 parts by mass, particularly preferably greater than 2.0 parts by mass, from the viewpoint of ozone crack resistance of a rubber. Moreover, it is preferably less than 10 parts by mass, more preferably less than 5 parts by mass, from the viewpoints of abrasion resistance and wet grip performance.

A content of stearic acid when compounded based on 100 parts by mass of the rubber component is preferably greater than 0.5 parts by mass, more preferably greater than 1 parts by mass, further preferably greater than 1.5 parts by mass, from the viewpoint of processability. Moreover, it is preferably less than 10 parts by mass, more preferably less than 8 parts by mass, further preferably less than 5 parts by mass, from the viewpoint of vulcanization rate.

A content of zinc oxide when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10.0 parts by mass, more preferably less than 5.0 parts by mass, further preferably less than 3.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably greater than 0.5 parts by mass, more preferably greater than 1 parts by mass, further preferably greater than 1.5 part by mass, from the viewpoint of securing a sufficient vulcanization reaction. Moreover, it is preferably less than 3.0 parts by mass, more preferably less than 2.5 parts by mass, further preferably 2.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1.0 parts by mass, more preferably 1.25 parts by mass or more. Moreover, the content of the vulcanization accelerator based on 100 parts by mass of the rubber component is preferably less than 8.0 parts by mass, more preferably less than 6.0 parts by mass, further preferably less than 3.0 parts by mass. When the content of the vulcanization accelerator is within the above-described ranges, breaking strength and elongation tend to be secured.

[Production]

The rubber composition according to the present invention can be produced by a known method. For example, it can be produced by kneading each of the above-described components using a rubber kneading apparatus such as an open roll, a closed type kneader, and the like (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes.

The tire comprising a tread part formed of the above-described rubber composition can be produced by a usual method. That is, the tire can be produced by extruding an unvulcanized rubber composition compounded from the rubber component and other components as necessary into a shape of a rubber layer formed of a tread part, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30

minutes.

[Application]

The tire according to the present invention is a tire comprising a tread part, which may be a pneumatic tire or a non-pneumatic tire, but can be appropriately used as a pneumatic tire. Moreover, the tire of the present invention can be used for various applications such as a tire for a passenger car, a heavy duty tire for a trucks/bus, a motorcycle tire, a tire for a three-wheeled vehicle, and the like. In addition, recently, an autonomous driving technology has been studied in order to realize a safe and comfortable vehicle operation while reducing a driver's burden, but the tire of the present invention can be appropriately used as such a tire for autonomous driving car.

EXAMPLE

Examples that are considered to be preferable in implementation (Examples) are shown below, but the scope of the present invention is not limited to Examples.
Considering a tire comprising a tread part formed of a rubber composition obtained according to Tables 1 to 7 using various chemicals shown below, results are calculated based on the following various analysis and evaluation methods shown below.
NR: TSR20
SBR1: S-SBR produced according to Production example 1 below (styrene content: 33% by mass, vinyl content: 31 mol%, Tg: -35°C, Mw: 1,000,000, non-extended)
SBR2: S-SBR produced according to Production example 2 below (styrene content: 27.5% by mass, vinyl content: 59 mol%, Tg: -25°C, Mw: 300,000, non-extended)
SBR3: HPR840 manufactured by JSR Corporation (styrene content: 10% by mass, vinyl content: 42 mol%, Tg: -60°C, non-extended)
BR: UBEPOL-BR360B manufactured by Ube Industries, Ltd. (unmodified BR, high cis BR, cis 1,4-bond content: 98%, Mw: 570,000)
Carbon black: DIABLACK (N220) manufactured by Mitsubishi Chemical Corporation ($N_2SA$: 114 $m^2/g$, average primary particle size: 22 nm)
Silica 1: Ultrasil VN3 manufactured by Evonik Degussa GmbH ($N_2SA$: 175 $m^2/g$, average primary particle size: 15nm)
Silica 2: 9100GR manufactured by Evonik Degussa GmbH ($N_2SA$: 235 $m^2/g$, average primary particle size: 15.6 nm)
Coupling agent 1: Si266 manufactured by Evonik Degussa GmbH (bis(3-triethoxysilylpropyl)disulfide)
Coupling agent 2: NXT manufactured by Momentive Performance Materials (3-octanoylthiopropyltriethoxysilane)
Resin component: Sylvatraxx 4401 (aromatic petroleum resin manufactured by Kraton Corporation ($\alpha$-methylstyrene resin: copolymer of $\alpha$-methylstyrene and styrene), softening point: 85°C)
Oil 1: Diana Process NH-70S manufactured by Idemitsu Kosan Co., Ltd. (aromatic process oil)
Wax: SUNNOC N manufactured by Ouchi Shinko Chemical Industry Co., Ltd.
Oil 2: Sunflower oil manufactured by The Nisshin OilliO Group, Ltd. (content of oleic acid contained in constituent fatty acid: 55% by mass, total content of polyunsaturated fatty acid contained in constituent fatty acid: 8% by mass)
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Zinc oxide: Zinc oxide No. 1 manufactured by Mitsui Mining & Smelting Co., Ltd.
Stearic acid: Bead stearic acid "CAMELLIA" manufactured by NOF CORPORATION
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide)
Vulcanization accelerator 2: Nocceler D manufactured by Ouchi Shinko Chemical Industry Co., Ltd. (1,3-diphenylguanidine (DPG))

(Production example 1: Production of SBR1)

600 mL of hexane, 75 g of 1,3-butadiene, 25 g of styrene, and 60 mL of tetrahydrofuran are charged into an autoclave reactor subjected to nitrogen purge and stirred at 40°C. After adding 0.1 mol/L of n-butyllithium/hexane solution in 0.5 mL each to scavenge them, 4 mL of 0.1 mol/L n-butyllithium/hexane solution was added, and the mixture was stirred

at a stirring speed of 130 rpm and a jacket temperature at 80°C. After confirming production of a polymer having a Mw of 1,000,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain a SBR1.

(Production example 2: Production of SBR2)

600 mL of hexane, 75 g of 1,3-butadiene, 25 g of styrene, and 60 mL of tetrahydrofuran are charged into an autoclave reactor subjected to nitrogen purge and stirred at 40°C. After adding 0.1 mol/L of n-butyllithium/hexane solution in 0.5 mL each to scavenge them, 4 mL of 0.1 mol/L n-butyllithium/hexane solution was added, and the mixture was stirred at a stirring speed of 130 rpm and a jacket temperature at 80°C. After confirming production of a polymer having a Mw of 300,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain a SBR2.

(Examples and Comparative examples)

According to the compounding formulations shown in Tables 1 to 7, using a 1.7 L closed Banbury mixer, all chemicals other than sulfur and vulcanization accelerators are kneaded for 5 minutes until a temperature reaches a discharge temperature at 170°C to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is extruded into a shape of a rubber layer formed of a tread part with an extruder equipped with a mouthpiece having a predetermined shape and attached together with other tire members, forming an unvulcanized tire, and the unvulcanized tire is press-vulcanized under a condition of 170°C for 12 minutes to produce and prepare each test tire.

Each test tire is evaluated as follows. Besides, each of a tire outer diameter Dt, in mm, and a tire cross-sectional width Wt, in mm, is a value measured in a state where each tire is rim-assembled on a standardized rim, filled with a standardized internal pressure, and applied with no load.

<Measurement of 30°C tan δ (30°C tan δ) of tread part>

For each unvulcanized rubber test piece produced by being cut out with 20 mm in length × 4 mm in width × 1 mm in thickness from a tread part of each test tire so that a tire circumferential direction is on a long side, using the dynamic viscoelasticity measuring device (EPLEXOR series manufactured by gabo Systemtechnik GmbH), a tan δ is measured under a condition of a frequency of 10 Hz, a temperature at 30°C, an initial strain of 5%, a dynamic strain of ±1%, and an extension mode.

<Fuel efficiency during high-load running>

Each test tire is incorporated into a standardized rim, filled with air to a standardized internal pressure, and then mounted on a vehicle weighing 1,800 kg, and the vehicle is made run on a test course with a dry road surface by a test driver at a speed of 80 km/h for 15 minutes. After running, the accelerator is released to measure a distance from the release of the accelerator until the vehicle stops. For each test tire, fuel efficiency is evaluated by an index with an inverse value of a distance for the reference Comparative example (Comparative example 3 in Tables 1 to 3, Comparative example 6 in Tables 4 and 5, Comparative example 9 in Tables 6 and 7) being as 100. The results show that the larger the index value is, the better the fuel efficiency is.

(Fuel efficiency index at high load) = (distance until vehicle of reference Comparative example stops) / (distance until vehicle having each compounding stops) × 100

Table 1

| | Example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 5 | 5 | 5 | 5 | 5 | 5 | 5 | 5 |
| SBR1 | 25 | 25 | - | 25 | 25 | - | 25 | 25 |
| SBR2 | 60 | 60 | 60 | 60 | 60 | 60 | 60 | 60 |
| SBR3 | - | - | 25 | - | - | 25 | - | - |
| BR | 10 | 10 | 10 | 10 | 10 | 10 | 10 | 10 |
| Carbon black | 5.0 | 5.0 | 5.0 | 5.0 | 5.0 | 5.0 | 5.0 | 5.0 |
| Silica 1 | 60 | 60 | 55 | 60 | - | 55 | 60 | - |
| Silica 2 | - | - | - | - | 55 | - | - | 55 |
| Coupling agent 1 | 4.8 | 4.8 | 4.4 | - | 3.6 | 4.4 | - | 3.6 |
| Coupling agent 2 | - | - | - | 4.8 | - | - | 4.8 | - |
| Resin component | 5.0 | 5.0 | - | 5.0 | 5.0 | - | 5.0 | 5.0 |
| Oil 1 | 7.0 | 7.0 | 2.0 | 7.0 | 7.0 | 2.0 | 7.0 | 7.0 |
| Wax | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Sulfur | 1.6 | 1.6 | 1.6 | 1.6 | 1.6 | 1.6 | 1.6 | 1.6 |
| Vulcanization accelerator 1 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 |
| Total styrene amount (% by mass) | 24.8 | 24.8 | 19.0 | 24.8 | 24.8 | 19.0 | 24.8 | 24.8 |
| Total content of plasticizing agent (part by mass) | 12.0 | 12.0 | 2.0 | 12.0 | 12.0 | 2.0 | 12.0 | 12.0 |
| 30°C tan δ | 0.14 | 0.14 | 0.09 | 0.12 | 0.13 | 0.09 | 0.12 | 0.13 |
| Tire | | | | | | | | |
| Tire size | 175/60R15 | 175/50R16 | 175/60R15 | 175/60R15 | 175/60R15 | 175/50R16 | 175/50R16 | 175/50R16 |
| Dt (mm) | 591 | 557 | 591 | 591 | 591 | 557 | 557 | 557 |
| Wt (mm) | 177 | 182 | 177 | 177 | 177 | 182 | 182 | 182 |
| Right side of inequality (1) | 0.15 | 0.16 | 0.15 | 0.15 | 0.15 | 0.16 | 0.16 | 0.16 |

(continued)

| Tire | | | | | | | | |
|---|---|---|---|---|---|---|---|---|
| $W_L$ (kg) | 462 | 387 | 462 | 462 | 462 | 387 | 387 | 387 |
| G (kg) | 6.2 | 6.8 | 6.2 | 6.2 | 6.2 | 6.8 | 6.8 | 6.8 |
| $G/W_L$ | 0.013 | 0.018 | 0.013 | 0.013 | 0.013 | 0.018 | 0.018 | 0.018 |
| Land ratio (%) | 70 | 72 | 70 | 70 | 70 | 72 | 72 | 70 |
| Fuel efficiency during high-load running | 102 | 107 | 120 | 110 | 107 | 130 | 118 | 114 |

Table 2

| | Example | | | | |
|---|---|---|---|---|---|
| | 9 | 10 | 11 | 12 | 13 |
| Compounding amount (part by mass) | | | | | |
| NR | 5 | 5 | 5 | 5 | 5 |
| SBR1 | - | - | 25 | - | - |
| SBR2 | 70 | 70 | 60 | 70 | 70 |
| SBR3 | 15 | 15 | - | 15 | 15 |
| BR | 10 | 10 | 10 | 10 | 10 |
| Carbon black | 5.0 | 5.0 | 5.0 | 5.0 | 5.0 |
| Silica 1 | 55 | - | - | 55 | - |
| Silica 2 | - | 50 | 55 | - | 50 |
| Coupling agent 1 | - | 3.3 | - | - | 3.3 |
| Coupling agent 2 | 4.4 | - | 3.6 | 4.4 | - |
| Resin component | - | - | 5.0 | - | - |
| Oil 1 | 2.0 | 2.0 | 7.0 | 2.0 | 2.0 |
| Oil 2 | - | - | - | - | - |
| Wax | 2.0 | 2.0 | 2.0 | 2.0 | 2.0 |
| Antioxidant 1 | 2.0 | 2.0 | 2.0 | 2.0 | 2.0 |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.0 | 2.0 | 2.0 | 2.0 | 2.0 |
| Sulfur | 1.6 | 1.6 | 1.6 | 1.6 | 1.6 |
| Vulcanization accelerator 1 | 2.0 | 2.0 | 2.0 | 2.0 | 2.0 |
| Vulcanization accelerator 2 | 2.0 | 2.0 | 2.0 | 2.0 | 2.0 |
| Total styrene amount (% by mass) | 20.8 | 20.8 | 24.8 | 20.8 | 20.8 |
| Total content of plasticizing agent (part by mass) | 2.0 | 2.0 | 12.0 | 2.0 | 2.0 |
| 30°C tan $\delta$ | 0.09 | 0.09 | 0.11 | 0.09 | 0.09 |
| Tire | | | | | |
| Tire size | 175/60R15 | 175/60R15 | 175/60R15 | 175/50R16 | 175/50R16 |
| Dt (mm) | 591 | 591 | 591 | 557 | 557 |
| Wt (mm) | 177 | 177 | 177 | 182 | 181 |
| Right side of inequality (1) | 0.15 | 0.15 | 0.15 | 0.16 | 0.16 |
| $W_L$ (kg) | 462 | 462 | 462 | 387 | 387 |
| G (kg) | 6.2 | 6.2 | 6.2 | 6.8 | 6.8 |
| $G/W_L$ | 0.013 | 0.013 | 0.013 | 0.018 | 0.018 |
| Land ratio (%) | 70 | 70 | 70 | 72 | 72 |
| Fuel efficiency during high-load running | 127 | 127 | 118 | 137 | 137 |

| | Example | | | | |
|---|---|---|---|---|---|
| | 14 | 15 | 16 | 17 | 18 |
| Compounding amount (part by mass) | | | | | |
| NR | 5 | 5 | 5 | 5 | 5 |
| SBR1 | 25 | - | - | - | - |
| SBR2 | 60 | 70 | 70 | 60 | 60 |
| SBR3 | - | 15 | 15 | 25 | 15 |

(continued)

| | Example | | | | |
|---|---|---|---|---|---|
| | 14 | 15 | 16 | 17 | 18 |
| Compounding amount (part by mass) | | | | | |
| BR | 10 | 10 | 10 | 10 | 10 |
| Carbon black | 5.0 | 5.0 | 5.0 | 5.0 | 5.0 |
| Silica 1 | - | - | - | - | - |
| Silica 2 | 55 | 50 | 50 | 50 | 50 |
| Coupling agent 1 | - | - | - | - | - |
| Coupling agent 2 | 3.6 | 3.3 | 3.3 | 3.3 | 3.3 |
| Resin component | 5.0 | - | - | - | - |
| Oil 1 | 7.0 | 2.0 | 2.0 | - | 2.0 |
| Oil 2 | - | - | - | 2.0 | - |
| Wax | 2.0 | 2.0 | 2.0 | 2.0 | 2.0 |
| Antioxidant 1 | 2.0 | 2.0 | 2.0 | 2.0 | 2.0 |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.0 | 2.0 | 2.0 | 2.0 | 2.0 |
| Sulfur | 1.6 | 1.6 | 1.6 | 1.6 | 1.6 |
| Vulcanization accelerator 1 | 2.0 | 2.0 | 2.0 | 2.0 | 2.0 |
| Vulcanization accelerator 2 | 2.0 | 2.0 | 2.0 | 2.0 | 2.0 |
| Total styrene amount (% by mass) | 24.8 | 20.8 | 20.8 | 19.0 | 19.0 |
| Total content of plasticizing agent (part by mass) | 12.0 | 2.0 | 2.0 | 2.0 | 2.0 |
| 30°C tan δ | 0.11 | 0.08 | 0.08 | 0.06 | 0.07 |
| Tire | | | | | |
| Tire size | 175/50R16 | 175/60R15 | 175/50R16 | 175/50R16 | 175/50R16 |
| Dt (mm) | 557 | 591 | 557 | 557 | 557 |
| Wt (mm) | 182 | 177 | 183 | 182 | 182 |
| Right side of inequality (1) | 0.16 | 0.15 | 0.16 | 0.16 | 0.16 |
| $W_L$ (kg) | 387 | 462 | 387 | 387 | 387 |
| G (kg) | 6.8 | 6.2 | 6.8 | 6.8 | 6.8 |
| $G/W_L$ | 0.018 | 0.013 | 0.018 | 0.018 | 0.018 |
| Land ratio (%) | 72 | 70 | 72 | 72 | 72 |
| Fuel efficiency during high-load running | 127 | 138 | 152 | 158 | 156 |

Table 3

| | Comparative example | | |
|---|---|---|---|
| | 1 | 2 | 3 |
| Compounding amount (part by mass) | | | |
| NR | 5 | 5 | 5 |
| SBR1 | 25 | 25 | 25 |
| SBR2 | 60 | 60 | 60 |
| SBR3 | - | - | - |
| BR | 10 | 10 | 10 |
| Carbon black | 5.0 | 5.0 | 5.0 |

(continued)

| | Comparative example 1 | Comparative example 2 | Comparative example 3 |
|---|---|---|---|
| Compounding amount (part by mass) | | | |
| Silica 1 | 70 | 70 | 60 |
| Silica 2 | - | - | - |
| Coupling agent 1 | 5.6 | 5.6 | 4.8 |
| Coupling agent 2 | - | - | - |
| Resin component | 5.0 | 5.0 | 5.0 |
| Oil 1 | 17.0 | 17.0 | 7.0 |
| Wax | 2.0 | 2.0 | 2.0 |
| Antioxidant 1 | 2.0 | 2.0 | 2.0 |
| Antioxidant 2 | 1.0 | 1.0 | 1.0 |
| Zinc oxide | 2.0 | 2.0 | 2.0 |
| Stearic acid | 2.0 | 2.0 | 2.0 |
| Sulfur | 1.6 | 1.6 | 1.6 |
| Vulcanization accelerator 1 | 2.0 | 2.0 | 2.0 |
| Vulcanization accelerator 2 | 2.0 | 2.0 | 2.0 |
| Total styrene amount (% by mass) | 24.8 | 24.8 | 24.8 |
| Total content of plasticizing agent (part by mass) | 22.0 | 22.0 | 12.0 |
| 30°C tan δ | 0.17 | 0.17 | 0.14 |
| Tire | | | |
| Tire size | 175/60R19 | 175/60R15 | 175/60R19 |
| Dt (mm) | 693 | 590 | 693 |
| Wt (mm) | 177 | 176 | 177 |
| Right side of inequality (1) | 0.15 | 0.15 | 0.15 |
| $W_L$ (kg) | 515 | 432 | 515 |
| G (kg) | 8.7 | 6.2 | 8.7 |
| $G/W_L$ | 0.017 | 0.014 | 0.017 |
| Land ratio (%) | 68 | 70 | 68 |
| Fuel efficiency during high-load running | 96 | 95 | 100 |

Table 4

| | Example | | | | | | | |
|---|---|---|---|---|---|---|---|---|
| | 19 | 20 | 21 | 22 | 23 | 24 | 25 | 26 |
| Compounding amount (part by mass) | | | | | | | | |
| NR | 5 | 5 | 5 | 5 | 5 | 5 | 5 | 5 |
| SBR1 | 25 | - | 25 | 25 | - | - | 25 | - |
| SBR2 | 60 | 60 | 60 | 60 | 70 | 70 | 60 | 70 |
| SBR3 | - | 25 | - | - | 15 | 15 | - | 15 |
| BR | 10 | 10 | 10 | 10 | 10 | 10 | 10 | 10 |
| Carbon black | 5.0 | 5.0 | 5.0 | 5.0 | 5.0 | 5.0 | 5.0 | 5.0 |
| Silica 1 | 60 | 55 | 60 | - | 55 | - | - | - |
| Silica 2 | - | - | - | 55 | - | 50 | 55 | 50 |
| Coupling agent 1 | 4.8 | 4.4 | - | 3.6 | - | 3.3 | - | - |
| Coupling agent 2 | - | - | 4.8 | - | 4.4 | - | 3.6 | 3.3 |
| Resin component | 5.0 | - | 5.0 | 5.0 | - | - | 5.0 | - |
| Oil 1 | 7.0 | 2.0 | 7.0 | 7.0 | 2.0 | 2.0 | 7.0 | 2.0 |
| Wax | 2.0 | 2.0 | 2.0 | 2.0 | 2.0 | 2.0 | 2.0 | 2.0 |
| Antioxidant 1 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Sulfur | 1.6 | 1.6 | 1.6 | 1.6 | 1.6 | 1.6 | 1.6 | 1.6 |
| Vulcanization accelerator 1 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 |
| Total styrene amount (% by mass) | 24.8 | 19.0 | 24.8 | 24.8 | 20.8 | 20.8 | 24.8 | 20.8 |
| Total content of plasticizing agent (part by mass) | 12.0 | 2.0 | 12.0 | 12.0 | 2.0 | 2.0 | 12.0 | 2.0 |
| 30°C tan δ | 0.14 | 0.09 | 0.12 | 0.13 | 0.09 | 0.09 | 0.11 | 0.08 |
| Tire | | | | | | | | |
| Tire size | 195/40R16 | 195/40R16 | 195/40R16 | 195/40R16 | 195/40R16 | 195/40R16 | 195/40R16 | 195/40R16 |
| Dt (mm) | 562 | 564 | 564 | 561 | 563 | 562 | 560 | 561 |
| Wt (mm) | 200 | 201 | 202 | 200 | 201 | 201 | 199 | 199 |
| Right side of inequality (1) | 0.17 | 0.17 | 0.17 | 0.17 | 0.17 | 0.17 | 0.17 | 0.17 |

(continued)

| Tire | | | | | | | | |
|---|---|---|---|---|---|---|---|---|
| $W_L$ (kg) | 462 | 462 | 462 | 462 | 462 | 462 | 462 | 462 |
| G (kg) | 8.2 | 8.2 | 8.2 | 8.2 | 8.2 | 8.2 | 8.2 | 8.2 |
| $G/W_L$ | 0.018 | 0.018 | 0.018 | 0.018 | 0.018 | 0.018 | 0.018 | 0.018 |
| Land ratio (%) | 72 | 72 | 72 | 72 | 72 | 72 | 72 | 72 |
| Fuel efficiency during high-load running | 110 | 133 | 120 | 117 | 141 | 141 | 131 | 155 |

Table 5

| | Comparative example | | |
|---|---|---|---|
| | 4 | 5 | 6 |
| Compounding amount (part by mass) | | | |
| NR | 5 | 5 | 5 |
| SBR1 | 25 | 25 | 25 |
| SBR2 | 60 | 60 | 60 |
| SBR3 | - | - | - |
| BR | 10 | 10 | 10 |
| Carbon black | 5.0 | 5.0 | 5.0 |
| Silica 1 | 75 | 75 | 60 |
| Silica 2 | - | - | - |
| Coupling agent 1 | 6.0 | 6.0 | 4.8 |
| Coupling agent 2 | - | - | - |
| Resin component | 10.0 | 10.0 | 5.0 |
| Oil 1 | 17.0 | 17.0 | 7.0 |
| Wax | 2.0 | 2.0 | 2.0 |
| Antioxidant 1 | 2.0 | 2.0 | 2.0 |
| Antioxidant 2 | 1.0 | 1.0 | 1.0 |
| Zinc oxide | 2.0 | 2.0 | 2.0 |
| Stearic acid | 2.0 | 2.0 | 2.0 |
| Sulfur | 1.6 | 1.6 | 1.6 |
| Vulcanization accelerator 1 | 2.0 | 2.0 | 2.0 |
| Vulcanization accelerator 2 | 2.0 | 2.0 | 2.0 |
| Total styrene amount (% by mass) | 24.8 | 24.8 | 24.8 |
| Total content of plasticizing agent (part by mass) | 27.0 | 27.0 | 12.0 |
| 30°C tan $\delta$ | 0.19 | 0.19 | 0.14 |
| Tire | | | |
| Tire size | 195/45R17 | 195/40R16 | 195/45R17 |
| Dt (mm) | 608 | 562 | 607 |
| Wt (mm) | 195 | 201 | 194 |
| Right side of inequality (1) | 0.18 | 0.17 | 0.17 |
| $W_L$ (kg) | 515 | 462 | 515 |
| G (kg) | 8.3 | 8.2 | 8.3 |
| $G/W_L$ | 0.016 | 0.018 | 0.016 |
| Land ratio (%) | 71 | 72 | 71 |
| Fuel efficiency during high-load running | 96 | 95 | 100 |

Table 6

| | Example | | | | |
|---|---|---|---|---|---|
| | 27 | 28 | 29 | 30 | 31 |
| Compounding amount (part by mass) | | | | | |
| NR | 5 | 5 | 5 | 5 | 5 |
| SBR1 | - | 15 | - | 25 | 25 |
| SBR2 | 70 | 70 | 70 | 60 | 60 |
| SBR3 | 15 | - | 15 | - | - |

(continued)

| | Example | | | | |
|---|---|---|---|---|---|
| | 27 | 28 | 29 | 30 | 31 |
| Compounding amount (part by mass) | | | | | |
| BR | 10 | 10 | 10 | 10 | 10 |
| Carbon black | 5.0 | 5.0 | 5.0 | 5.0 | 5.0 |
| Silica 1 | 55 | 55 | 55 | 60 | - |
| Silica 2 | - | - | - | - | 55 |
| Coupling agent 1 | 4.4 | 4.4 | 4.4 | - | 3.6 |
| Coupling agent 2 | - | - | - | 4.8 | - |
| Resin component | - | - | - | 5.0 | 5.0 |
| Oil 1 | 2.0 | 2.0 | 2.0 | 7.0 | 7.0 |
| Wax | 2.0 | 2.0 | 2.0 | 2.0 | 2.0 |
| Antioxidant 1 | 2.0 | 2.0 | 2.0 | 2.0 | 2.0 |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.0 | 2.0 | 2.0 | 2.0 | 2.0 |
| Sulfur | 1.6 | 1.6 | 1.6 | 1.6 | 1.6 |
| Vulcanization accelerator 1 | 2.0 | 2.0 | 2.0 | 2.0 | 2.0 |
| Vulcanization accelerator 2 | 2.0 | 2.0 | 2.0 | 2.0 | 2.0 |
| Total styrene amount (% by mass) | 20.8 | 24.2 | 20.8 | 24.8 | 24.8 |
| Total content of plasticizing agent (part by mass) | 2.0 | 2.0 | 2.0 | 12.0 | 12.0 |
| 30°C tan δ | 0.10 | 0.12 | 0.10 | 0.12 | 0.13 |
| Tire | | | | | |
| Tire size | 215/50R15 | 215/40R16 | 215/40R16 | 215/40R16 | 215/40R16 |
| Dt (mm) | 597 | 553 | 551 | 553 | 554 |
| Wt (mm) | 226 | 218 | 216 | 216 | 218 |
| Right side of inequality (1) | 0.10 | 0.13 | 0.14 | 0.14 | 0.13 |
| $W_L$ (kg) | 600 | 530 | 530 | 530 | 530 |
| G (kg) | 10.1 | 8.3 | 8.3 | 8.3 | 8.3 |
| $G/W_L$ | 0.017 | 0.016 | 0.016 | 0.016 | 0.016 |
| Land ratio (%) | 74 | 72 | 72 | 72 | 72 |
| Fuel efficiency during high-load running | 106 | 107 | 120 | 112 | 106 |

| | Example | | | | |
|---|---|---|---|---|---|
| | 32 | 33 | 34 | 35 | |
| Compounding amount (part by mass) | | | | | |
| NR | 5 | 5 | 5 | 5 | |
| SBR1 | - | - | 25 | - | |
| SBR2 | 70 | 70 | 60 | 70 | |
| SBR3 | 15 | 15 | | 15 | |
| BR | 10 | 10 | 10 | 10 | |
| Carbon black | 5.0 | 5.0 | 5.0 | 5.0 | |
| Silica 1 | 55 | - | - | - | |
| Silica 2 | - | 50 | 55 | 50 | |
| Coupling agent 1 | - | 3.3 | - | - | |

(continued)

| | Example | | | |
|---|---|---|---|---|
| | 32 | 33 | 34 | 35 |
| Compounding amount (part by mass) | | | | |
| Coupling agent 2 | 4.4 | - | 3.6 | 3.3 |
| Resin component | - | - | 5.0 | - |
| Oil 1 | 2.0 | 2.0 | 7.0 | 2.0 |
| Wax | 2.0 | 2.0 | 2.0 | 2.0 |
| Antioxidant 1 | 2.0 | 2.0 | 2.0 | 2.0 |
| Antioxidant 2 | 1.0 | 1.0 | 1.0 | 1.0 |
| Zinc oxide | 2.0 | 2.0 | 2.0 | 2.0 |
| Stearic acid | 2.0 | 2.0 | 2.0 | 2.0 |
| Sulfur | 1.6 | 1.6 | 1.6 | 1.6 |
| Vulcanization accelerator 1 | 2.0 | 2.0 | 2.0 | 2.0 |
| Vulcanization accelerator 2 | 2.0 | 2.0 | 2.0 | 2.0 |
| Total styrene amount (% by mass) | 20.8 | 20.8 | 24.8 | 20.8 |
| Total content of plasticizing agent (part by mass) | 2.0 | 2.0 | 12.0 | 2.0 |
| 30°C tan δ | 0.09 | 0.09 | 0.11 | 0.08 |
| Tire | | | | |
| Tire size | 215/50R15 | 215/50R15 | 215/40R16 | 215/50R15 |
| Dt (mm) | 595 | 597 | 552 | 598 |
| Wt (mm) | 224 | 225 | 218 | 225 |
| Right side of inequality (1) | 0.11 | 0.10 | 0.13 | 0.10 |
| $W_L$ (kg) | 600 | 600 | 530 | 600 |
| G (kg) | 10.1 | 10.1 | 8.3 | 10.1 |
| $G/W_L$ | 0.017 | 0.017 | 0.016 | 0.017 |
| Land ratio (%) | 74 | 74 | 72 | 74 |
| Fuel efficiency during high-load running | 118 | 116 | 117 | 126 |

Table 7

| | Comparative example | | |
|---|---|---|---|
| | 7 | 8 | 9 |
| Compounding amount (part by mass) | | | |
| NR | 5 | 5 | 5 |
| SBR1 | 25 | 25 | - |
| SBR2 | 60 | 60 | 70 |
| SBR3 | - | - | 15 |
| BR | 10 | 10 | 10 |
| Carbon black | 5.0 | 5.0 | 5.0 |
| Silica 1 | 60 | 60 | 55 |
| Silica 2 | - | - | - |
| Coupling agent 1 | 4.8 | 4.8 | 4.4 |
| Coupling agent 2 | - | - | - |
| Resin component | 5.0 | 5.0 | - |
| Oil 1 | 7.0 | 7.0 | 2.0 |

(continued)

| | Comparative example | | |
|---|---|---|---|
| | 7 | 8 | 9 |
| Compounding amount (part by mass) | | | |
| Wax | 2.0 | 2.0 | 2.0 |
| Antioxidant 1 | 2.0 | 2.0 | 2.0 |
| Antioxidant 2 | 1.0 | 1.0 | 1.0 |
| Zinc oxide | 2.0 | 2.0 | 2.0 |
| Stearic acid | 2.0 | 2.0 | 2.0 |
| Sulfur | 1.6 | 1.6 | 1.6 |
| Vulcanization accelerator 1 | 2.0 | 2.0 | 2.0 |
| Vulcanization accelerator 2 | 2.0 | 2.0 | 2.0 |
| Total styrene amount (% by mass) | 24.8 | 24.8 | 20.8 |
| Total content of plasticizing agent (part by mass) | 12.0 | 12.0 | 2.0 |
| 30°C tan $\delta$ | 0.14 | 0.14 | 0.10 |
| Tire | | | |
| Tire size | 215/50R16 | 215/50R15 | 215/50R16 |
| Dt (mm) | 622 | 598 | 621 |
| Wt (mm) | 226 | 227 | 226 |
| Right side of inequality (1) | 0.10 | 0.09 | 0.10 |
| $W_L$ (kg) | 600 | 600 | 600 |
| G (kg) | 10.2 | 10.1 | 10.2 |
| $G/W_L$ | 0.017 | 0.017 | 0.017 |
| Land ratio (%) | 71 | 74 | 71 |
| Fuel efficiency during high-load running | 96 | 93 | 100 |

10. Tread part
11. Circumferential groove
12. Shoulder land part
13. Center land part
14. Width direction groove
15. Width direction groove
16. Width direction groove

C. Tire circumferential direction
W. Tire width direction
Te. Tread end
Ht. Tire cross-sectional height
Wt. Tire cross-sectional width
Dt. Tire outer diameter

## Claims

**1.** A tire comprising a tread part (10),

wherein a tire outer diameter Dt is 600 mm or less,
wherein the tread part (10) is composed of a rubber composition comprising a rubber component and a filler,
wherein a tire cross-sectional width Wt, in mm, and a tan $\delta$ at 30°C (30°C tan $\delta$) of the rubber composition satisfy the following inequality (1):

$$30°C\ \tan\delta \leqq -7.84\times10^{-5}\times(Wt-195)^2+0.175\ (1),$$

the 30°C tan δ being measured under a condition of a temperature at 30°C, a frequency of 10 Hz, an initial strain of 5%, a dynamic strain of ±1%, and an extension mode,
wherein a total styrene amount in the rubber component of the rubber composition is greater than 10% by mass, and
wherein the rubber component comprises an isoprene-based rubber,
wherein a total content of plasticizing agents based on 100 parts by mass of the rubber component of the rubber composition is 12 parts by mass or less, **characterised in that**
a content of the isoprene-based rubber in the rubber component is 25% by mass or less.

**2.** The tire of claim 1, wherein Wt, in mm, is 180 or more and 225 or less.

**3.** The tire of claim 1 or 2, wherein 30°C tan δ of the rubber composition is 0.10 or less.

**4.** The tire of any one of claims 1 to 3, wherein the rubber composition further comprises a mercapto-based silane coupling agent.

**5.** The tire of any one of claims 1 to 4, wherein the filler comprises silica having an average primary particle size of 16 nm or less.

**6.** The tire of any one of claims 1 to 5, wherein the total styrene amount in the rubber component in the rubber composition is less than 20% by mass.

**7.** The tire of any one of claims 1 to 6, wherein a total content of the filler based on 100 parts by mass of the rubber component of the rubber composition is 60 parts by mass or less.

**8.** The tire of any one of claims 1 to 7, wherein the rubber composition further comprises a vegetable oil.

**9.** The tire of any one of claims 1 to 8, wherein the tire outer diameter Dt is 550 mm or less.

**10.** The tire of any one of claims 1 to 9, wherein a ratio ($G/W_L$) of a tire weight G, in kg, to the maximum load capacity $W_L$, in kg, of the tire is 0.0150 or less,

wherein the maximum load capacity $W_L$, in kg, of the tire is calculated from a tire volume V by the following equation:

$$W_L=0.000011\times V+100,$$

wherein the tire volume V, in $mm^3$, is calculated from Wt, in mm, Ht, in mm, and Dt, in mm, by the following equation:

$$V=\{(Dt/2)^2-(Dt/2-Ht)^2\}\times\pi\times Wt,$$

wherein a tire cross-sectional height Ht, in mm, is a length of half a difference between the tire outer diameter and the rim diameter, which is measured in a standardized state where the tire is rim-assembled on a standardized rim, filled with a standardized internal pressure, and applied with no load.

**11.** The tire of any one of claims 1 to 10, wherein a ratio (Wt/Dt) of the tire cross-sectional width Wt, in mm, to the tire outer diameter Dt, in mm, is 0.30 or more.

**12.** The tire of any one of claims 1 to 11, wherein a land ratio of the tread part (10) on a grounding surface is 65% or more.

**13.** The tire of any one of claims 1 to 12, wherein the tire is a tire for autonomous driving vehicle.

**Patentansprüche**

1. Reifen, der einen Laufstreifenteil (10) umfasst,

wobei ein Reifenaußendurchmesser Dt 600 mm oder weniger beträgt,
wobei der Laufstreifenteil (10) mit einer Kautschukzusammensetzung aufgebaut ist, die eine Kautschukkomponente und einen Füllstoff umfasst,
wobei eine Reifenquerschnittsbreite Wt, in mm, und ein tan $\delta$ bei 30°C (30°C tan $\delta$) der Kautschukzusammensetzung der folgenden Ungleichung (1) genügen:

$$30°C\ \tan\delta \leq -7{,}84\times10^{-5}\times(Wt-195)^2+0{,}175 \qquad (1),$$

wobei der 30°C tan $\delta$ unter Bedingungen einer Temperatur bei 30°C, einer Frequenz von 10 Hz, einer anfänglichen Dehnung von 5%, einer dynamischen Dehnung von ±1% und eines Streckungsmodus gemessen ist,
wobei eine Gesamtstyrolmenge in der Kautschukkomponente der Kautschukzusammensetzung größer als 10 Massen-% ist, und
wobei die Kautschukkomponente einen Isopren-basierten Kautschuk umfasst,
wobei ein Gesamtgehalt an weichmachenden Mitteln, bezogen auf 100 Massenteile der Kautschukkomponente der Kautschukzusammensetzung, 12 Massenteile oder weniger beträgt, **dadurch gekennzeichnet, dass** ein Gehalt des Isopren-basierten Kautschuks in der Kautschuckomponente 25 Massen-% oder weniger beträgt.

2. Reifen nach Anspruch 1, wobei Wt, in mm, 180 oder mehr und 225 oder weniger beträgt.

3. Reifen nach Anspruch 1 oder 2, wobei 30°C tan $\delta$ der Kautschukzusammensetzung 0,10 oder weniger beträgt.

4. Reifen nach einem der Ansprüche 1 bis 3, wobei die Kautschukzusammensetzung zudem ein mercapto-basiertes Silankopplungsmittel umfasst.

5. Reifen nach einem der Ansprüche 1 bis 4, wobei der Füllstoff Siliziumdioxid umfasst, das eine mittlere Primärpartikelgröße von 16 nm oder weniger aufweist.

6. Reifen nach einem der Ansprüche 1 bis 5, wobei die Gesamtstyrolmenge in der Kautschukkomponente in der Kautschukzusammensetzung weniger als 20 Massen-% beträgt.

7. Reifen nach einem der Ansprüche 1 bis 6, wobei ein Gesamtgehalt des Füllstoffes, bezogen auf 100 Massenteile der Kautschukkomponente der Kautschukzusammensetzung, 60 Massenteile oder weniger beträgt.

8. Reifen nach einem der Ansprüche 1 bis 7, wobei die Kautschukzusammensetzung zudem ein pflanzliches Öl umfasst.

9. Reifen nach einem der Ansprüche 1 bis 8, wobei der Reifenaußendurchmesser Dt 550 mm oder weniger beträgt.

10. Reifen nach einem der Ansprüche 1 bis 9, wobei ein Verhältnis ($G/W_L$) eines Reifengewichts G, in kg, zur maximalen Tragfähigkeit $W_L$, in kg, des Reifens 0,0150 oder weniger beträgt,

wobei die maximale Tragfähigkeit $W_L$, in kg, des Reifens aus einem Reifenvolumen V durch die folgende Gleichung berechnet ist:

$$W_L = 0{,}000011\times V+100,$$

wobei das Reifenvolumen V, in $mm^3$, aus Wt, in mm, Ht, in mm, und Dt, in mm, durch die folgende Gleichung berechnet ist:

$$V=\{(Dt/2)^2-(Dt/2-Ht)^2\}\times\pi\times Wt,$$

wobei eine Reifenquerschnittshöhe Ht, in mm, eine Länge der Hälfte einer Differenz zwischen dem Reifenaußendurchmesser und dem Felgendurchmesser ist, die in einem genormten Zustand gemessen ist, worin der

Reifen auf eine genormte Felge aufgezogen, mit einem genormten Innendruck befüllt und mit keiner Last beaufschlagt ist.

**11.** Reifen nach einem der Ansprüche 1 bis 10, wobei ein Verhältnis (Wt/Dt) der Reifenquerschnittsbreite Wt, in mm, zum Reifenaußendurchmesser Dt, in mm, 0,30 oder mehr beträgt.

**12.** Reifen nach einem der Ansprüche 1 bis 11, wobei ein Positivprofilanteil des Laufstreifenteils (10) auf einer Bodenkontaktoberfläche 65% oder mehr beträgt.

**13.** Reifen nach einem der Ansprüche 1 bis 12, wobei der Reifen ein Reifen für ein autonom fahrendes Fahrzeug ist.

## Revendications

**1.** Pneumatique comprenant une partie de bande de roulement (10), dans lequel un diamètre externe de pneumatique Dt est de 600 mm ou moins,

dans lequel la partie de bande de roulement (10) est composée d'une composition de caoutchouc comprenant un composant de caoutchouc et une charge,
dans lequel une largeur transversale de pneumatique Wt, en mm et une tan δ à 30 °C (tan δ 30 °C) de la composition de caoutchouc satisfont l'inégalité (1) suivante :

$$\tan \delta\ 30\ °C \leq 7{,}84 \times 10^{-5} \times (Wt - 195)^2 + 0{,}175 \quad (1),$$

la tan δ 30 °C est mesurée sous une condition d'une température à 30 °C, une fréquence de 10 Hz, une contrainte initiale de 5 %, une contrainte dynamique de ± 1 %, et un mode d'extension,
dans lequel une quantité de styrène totale dans le composant de caoutchouc de la composition de caoutchouc est plus grande que 10 % en masse, et
dans lequel le composant de caoutchouc comprend un caoutchouc à base d'isoprène,
dans lequel une teneur totale d'agents plastifiants sur la base de 100 parties en masse du composant de caoutchouc de la composition de caoutchouc est de 12 parties en masse ou moins,
**caractérisé en ce que**
une teneur du caoutchouc à base d'isoprène dans le composant de caoutchouc est de 25 % en masse ou moins.

**2.** Pneumatique selon la revendication 1, dans lequel Wt, en mm, est de 180 ou plus et de 225 ou moins.

**3.** Pneumatique selon la revendication 1 ou 2, dans lequel la tan δ 30 °C de la composition de caoutchouc est de 0,10 ou moins.

**4.** Pneumatique selon l'une quelconque des revendications 1 à 3, dans lequel la composition de caoutchouc comprend en outre un agent de couplage silane à base de mercapto.

**5.** Pneumatique selon l'une quelconque des revendications 1 à 4, dans lequel la charge comprend de la silice ayant une taille de particule primaire moyenne de 16 nm ou moins.

**6.** Pneumatique selon l'une quelconque des revendications 1 à 5, dans lequel la quantité de styrène totale dans le composant de caoutchouc dans la composition de caoutchouc est de moins de 20 % en masse.

**7.** Pneumatique selon l'une quelconque des revendications 1 à 6, dans lequel une teneur totale de la charge sur la base de 100 parties en masse du composant de caoutchouc de la composition de caoutchouc est de 60 parties en masse ou moins.

**8.** Pneumatique selon l'une quelconque des revendications 1 à 7, dans lequel la composition de caoutchouc comprend en outre une huile végétale.

**9.** Pneumatique selon l'une quelconque des revendications 1 à 8, dans lequel le diamètre externe de pneumatique Dt est de 550 mm ou moins.

**10.** Pneumatique selon l'une quelconque des revendications 1 à 9, dans lequel un rapport ($G/W_L$) d'un poids de pneumatique G, en kg, sur la capacité de charge maximum $W_L$, en kg, du pneumatique est de 0,0150 ou moins, dans lequel la capacité maximum de charge $W_L$, en kg, du pneumatique est calculée à partir d'un volume de pneumatique V par l'équation suivante :

$$W_L = 0{,}000011 \times V + 100,$$

dans lequel le volume de pneumatique V, en $mm^3$, est calculé à partir de Wt, en mm, Ht, en mm et Dt, en mm, par l'équation suivante :

$$V = \{(DT/2)^2 - (Dt/2 - Ht)^2\} \times \pi \times Wt,$$

dans lequel une hauteur transversale de pneumatique Ht, en mm, est une longueur de la moitié d'une différence entre le diamètre externe de pneumatique et le diamètre de jante, qui est mesuré dans un état standardisé où le pneumatique est assemblé en jante sur une jante standardisée, remplie avec une pression interne standardisée et appliquée sans charge.

**11.** Pneumatique selon l'une quelconque des revendications 1 à 10, dans lequel un rapport (Wt/Dt) de la largeur transversale de pneumatique Wt, en mm, au diamètre externe de pneumatique Dt, en mm, est de 0,30 ou plus.

**12.** Pneumatique selon l'une quelconque des revendications 1 à 11, dans lequel un rapport de surface terrestre de la partie de bande de roulement (10) sur une surface de sol est de 65 % ou plus.

**13.** Pneumatique selon l'une quelconque des revendications 1 à 12, dans lequel le pneumatique est un pneumatique pour véhicule à conduite autonome.

FIG.1

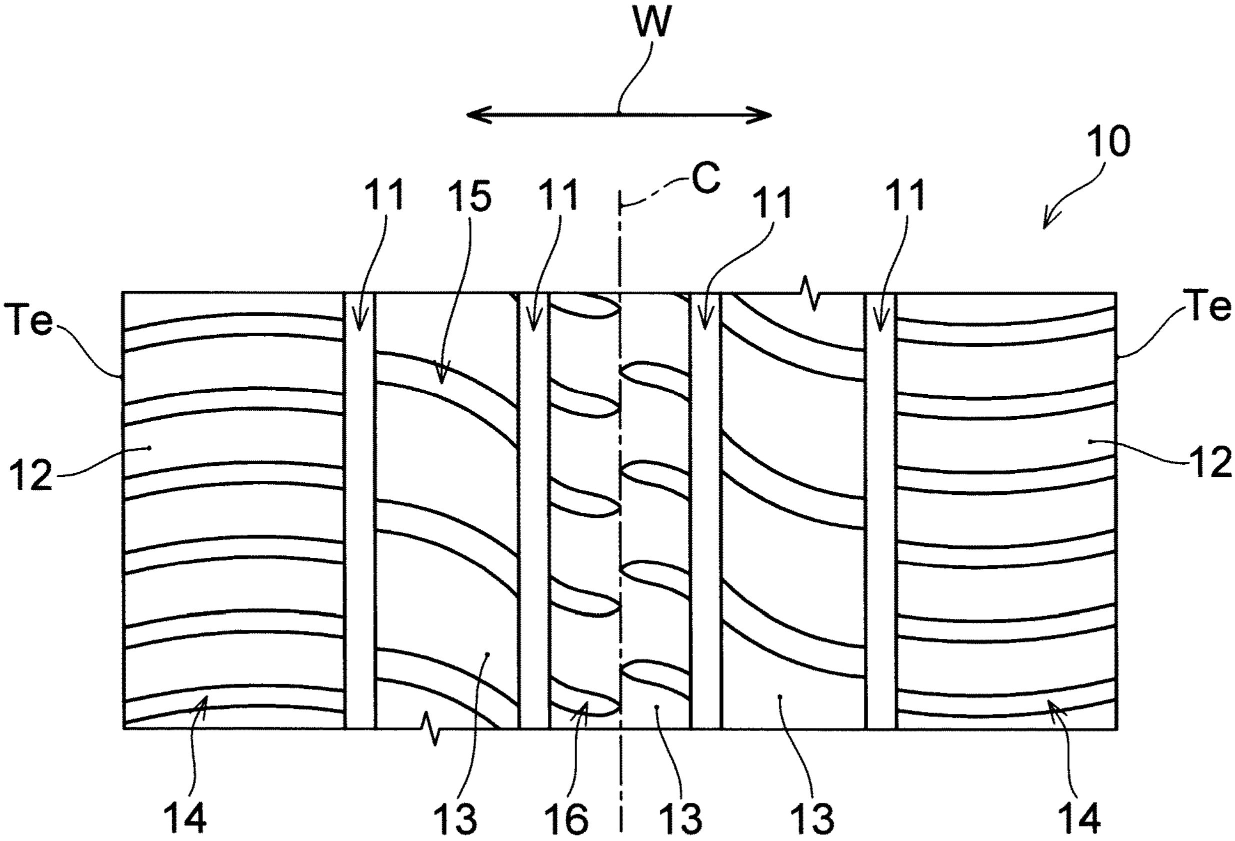

FIG. 2

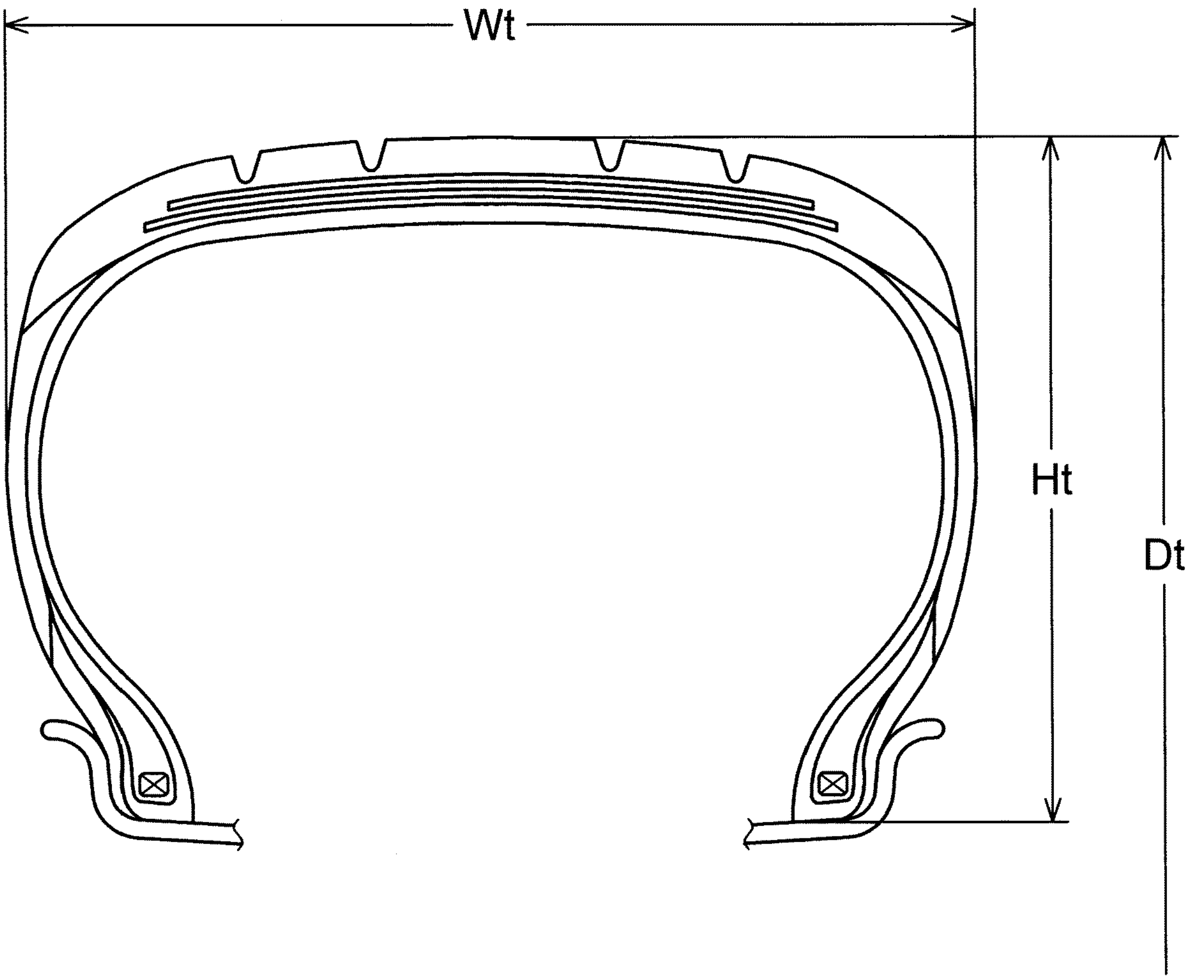

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017019494 A
- WO 2021215278 A1
- JP 2022021503 A
- EP 4074520 A1